# EUROPEAN PATENT APPLICATION

(11) **EP 2 226 367 A1**
(43) Date of publication of application: **08.09.2010**
(21) Application number: 10155108.3
(22) Date of filing: 02.03.2010
(51) Int. Cl.: C09D 11/10

(54) **Active energy ray-curable ink composition, inkjet recording method and printed material**

(30) Priority: 03.03.2009 JP 2009049409
(71) Applicant: Fujifilm Corporation, Minato-ku Tokyo (JP)
(72) Inventor: Hironaka, Koji, Ashigarakami-gun Kanagawa (JP); Kyota, Hirokazu, Ashigarakami-gun Kanagawa (JP)
(74) Representative: Grünecker, Kinkeldey, Stockmair & Schwanhäusser Anwaltssozietät

(57) **Abstract**

There are provided an active energy ray-curable ink composition which contains at least a compound that generates an acid by exposure to radiation and cationic polymerizable monomers, the ink composition includes a compound represented by the following Formula (1), and at least one of an oxirane compound or a vinyl ether compound, as the cationic polymerizable monomers: 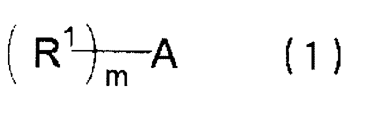 wherein, in Formula (1), R¹ represents a group having an oxetane skeleton; m is an integer from 1 to 4; A represents an m-valent group having a bicyclo ring skeleton or a tricyclo ring skeleton, the bicyclo ring skeleton and the tricyclo ring skeleton respectively containing at least one oxygen atom; and R¹ and A may be substituted with any substituent, that does not have an epoxy structure in the substituent.

## Description

### BACKGROUND OF THE INVENTION

### Field of the Invention

The invention relates to an active energy ray-curable ink composition that is suitably used for inkjet recording, an inkjet recording method, and a printed material obtained by using the method.

### Description of the Related Art

Cyclic ether compounds, such as three- or four-membered rings, are known as materials having high reactivity, and are used as polymerizable compounds that are included in curable compositions applied to thermopolymerization using photocationic polymerization or acid anhydrides (for example, Japanese Patent Application Laid-Open (JP-A) Nos. 11-43540 and No. 11-60702).

As an image recording method of forming an image on a recording medium, such as a paper or the like, on the basis of image data signals, there are an electrophotographic method, a sublimate-type and melt-type thermal transfer method, and an inkjet method. Among these, the inkjet method is feasible with a low cost device, in which an image is directly formed on a recording medium by jetting ink on a necessary image area only. Therefore, the ink can be efficiently used and the running cost is low. In addition, the inkjet method is superior as an image recording method since noise is low.
According to the inkjet method, it is possible to print not only on a normal paper but also on a non-absorptive recording medium, such as a plastic sheet and a metal plate. However, in this case, speeding-up upon printing and high definition are key matters. Thus, there is a property in which the time required for drying and curing droplets after printing have a large effect on productivity of printed materials or sharpness of printed images.

As one of the inkjet methods, there is a recording method that uses inkjet recording ink curable by exposure to radiation. According to this method, since ink droplets are cured by exposing to radiation immediately after or after a predetermined time after ink is ejected, the productivity of printing can be increased and sharp images can be formed.
When high sensitivity of inkjet recording ink curable by exposing to radiation, such as ultraviolet rays, is realized, high curability with respect to radiation is given, which causes numerous benefits, such as the improvement of the productivity of inkjet recording, the reduction in power consumption, the extension of lifetime due to a reduction in load on a radiation generator, and the prevention of the occurrence of volatilization of low molecule substances by insufficient curing.

Such an inkjet method by using an ink composition that cures by radiation ray such as ultraviolet light is attracting attention recently, as the ink composition is relatively odorless and fast-drying, and allows recording on a recording medium that absorbs a smaller amount of ink. A cationic polymerization ink composition having excellent adhesiveness to recording media and having a small ratio of shrinkage at the time of ultraviolet curing (see, for example, JP-A No. 9-183928) has been suggested as one such method.

JP-A No. 2004-250434 discloses an oxetane compound having an alicyclic skelton, and an ink composition using this compound is characterized by having excellent curability, flexibility and the like. However, the inventors of the invention have conducted investigations, and have found that such an ink composition may cause problems in terms of adhesiveness to a recording medium such as a substrate.

Furthermore, JP-A No. 2007-137926 discloses a photocationically curable inkjet ink using a vinyl ether compound that has a bicycle ring skeleton containing an oxygen atom in the ring, and it is believed that high curability as well as adhesiveness and the like may be obtained with this compound. However, according to the investigations of the present inventors, cured products formed from such an inkjet ink are often unsatisfactory in terms of flexibility.

### SUMMARY OF THE INVENTION

The present invention was made under such circumstances in the related art, and the invention is intended to achieve the following objects.
That is, an object of the invention is to provide an active energy ray-curable ink composition that is highly sensitive to the irradiation with active energy rays, that is capable of forming a cured product which is excellent in curability, flexibility and adhesiveness to recording media, and that may be used suitably for inkjet applications.

Another object of the invention is to provide an inkjet recording method using the active energy ray-curable ink composition, and a printed material that is recorded according to the inkjet recording method.

An active energy ray-curable ink composition of the invention contains at least a compound that generates an acid by exposure to radiation and cationic polymerizable monomers. The ink composition includes a compound represented by the following Formula (1), and at least one of an oxirane compound or a vinyl ether compound, as the cationic polymerizable monomers.

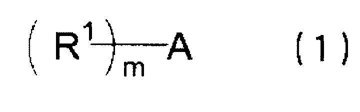

In Formula (1), R¹ represents a group having an oxetane skeleton; m is an integer from 1 to 4; A represents an m-valent group having a bicyclo ring skeleton or a tricyclo ring skeleton, the bicyclo ring skeleton and the tricyclo ring skeleton respectively containing at least one oxygen atom; and R¹ and A may be substituted with any substituent, that does not have an epoxy structure in the substituent.

As for the cationic polymerizable monomer, it is preferable to use the compound represented by Formula (1) and a vinyl ether compound in combination.
In the compound represented by Formula (1), m is preferably an integer from 2 to 3.
The active energy ray-curable ink composition of the invention is suitably used for inkjet recording applications.

An inkjet recording method includes jetting the active energy ray-curable ink composition of the present invention, on a medium to be recorded using an inkjet recording apparatus; and exposing the jetted ink composition to an active radiation to cure the ink composition.
According to the inkjet recording method of the invention, the active radiation is preferably an ultraviolet radiation irradiated from a light emitting diode that generates an ultraviolet radiation having an emission peak wavelength in the range of 350 nm to 420 nm and a maximum illuminance at the surface of the medium to be recorded of 10 mW/cm² to 2,000 mW/cm².
A printed material of the invention is a printed material that is recorded according to the inkjet recording method of the invention.

According to the invention, there may be provided an active energy ray-curable ink composition that is highly sensitive to exposure to active energy rays, that is capable of forming a cured product which is excellent in curability, flexibility and adhesiveness to recording media, and that may be suitably used for inkjet applications.
Furthermore, according to the invention, there may be provided an inkjet recording method using the active energy ray-curable ink composition of the invention, and a printed material that is recorded according to the inkjet recording method.

### DETAILED DESCRIPTION OF THE INVENTION

### 1. Active energy ray-curable ink composition

The active energy ray-curable ink composition (hereinafter, may be referred to as "ink composition") of the invention contains at least a compound that generates an acid by exposure to radiation and cationic polymerizable monomers. The ink composition includes a compound represented by the following Formula (1) (hereinafter, may be referred to as "specific polymerizable compound"), and at least one of an oxirane compound and a vinyl ether compound, as the cationic polymerizable monomer.

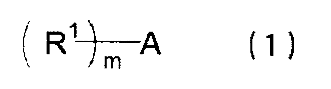

In Formula (1), R¹ represents a group having an oxetane skeleton; m is an integer from 1 to 4; A represents an m-valent group having a bicyclo ring skeleton or a tricyclo ring skeleton, the bicyclo ring skeleton and the tricyclo ring skeleton respectively contains at least one oxygen atom; and R¹ and A may be substituted with any substituent, that does not have an epoxy structure in the substituent.

The ink composition of the invention is a composition curable upon irradiation with a radiation.
The term "radiation" as used herein is not particularly limited, as long as it can supply an energy that is capable of generating an initiator species in a composition when irradiated, and broadly includes α-rays, γ-rays, X-rays, ultraviolet radiation, visible radiation, electron radiation and the like. Among them, the radiation is preferably ultraviolet radiation or electron radiation, and particularly preferably ultraviolet radiation, from the viewpoints of curing sensitivity and easy availability of apparatuses. Therefore, it is preferable that the ink composition of the invention be an ink composition that may be cured by irradiating with ultraviolet radiation as a radiation.

The specific polymerizable compound contained as one of the cationic polymerizable monomers according to the invention is preferably a compound that initiates a polymerization reaction, due to an acid generated from a compound capable of generating an acid upon irradiation with radiation, as described below, and that cures.
Furthermore, the ink composition of the invention contains, as the cationic polymerizable monomers, at least one of an oxirane compound or a vinyl ether compound, together with the specific polymerizable compound, as essential components.
Hereinafter, the components of the ink composition of the invention will be described in detail.

### 1-1. Cationic polymerizable monomers

The ink composition of the invention contains a specific polymerizable compound and at least one of an oxirane compound or a vinyl ether compound, as cationic polymerizable monomers. The cationic polymerizable monomers contained in the ink composition of the invention are described below.

### (1) Compound represented by Formula (1) (specific polymerizable compound)

The specific polymerizable compound that is contained in the ink composition of the invention as one of the cationic polymerizable monomers, and which is an essential component, is described below.
The specific polymerizable compound according to the invention is, as shown in the following Formula (1), a compound having a group having a bicyclo ring skeleton or tricyclo ring skeleton containing at least one oxygen atom in the ring (A), and linked thereto, a group having an oxetane skeleton (R¹).

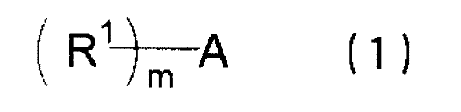

In Formula (1), R¹ represents a group having an oxetane skeleton; m is an integer from 1 to 4; A represents an m-valent group having a bicyclo ring skeleton or a tricyclo ring skeleton, the bicyclo ring skeleton and tricyclo ring skeleton respectively contains at least one oxygen atom; and R¹ and A may be substituted with any substituent, that does not have an epoxy structure in the substituent.

### (R¹: Group having oxetane skeleton)

In Formula (1), R¹ represents a group having an oxetane skeleton, and m units of R¹ are contained in one molecule; m is an integer from 1 to 4, and in order to achieve favorable properties with respect to the curability of the ink composition, the viscosity of the ink composition, the solubility of the compound generating an acid upon irradiation with a radiation, and the like, m is preferably 2 or 3.

The oxetane skeleton included in R¹, and the bicyclo ring skeleton or tricyclo ring skeleton included in A may be directly linked, or may be linked via any divalent linking group which may be included in R¹ together with the oxetane skeleton.

To obtain favorable properties and effects of the ink composition, the oxetane skeleton included in R¹ is preferably located near to the bicyclo ring skeleton or tricyclo ring skeleton included in A. Therefore, even if the oxetane skeleton and the bicyclo ring skeleton or tricyclo ring skeleton are linked via a linking group, the number of atoms of the linking group that exists between the oxetane skeleton and the bicyclo ring skeleton or tricyclo ring skeleton is preferably about 1 to 6, and more preferably in the range of 1 to 4. Such a linking group may be a divalent linking group formed by including a linking block such as - O-, -CH₂-, -C(O)-, or a phenylene group. The linking group may also be a divalent linking group formed by two or more of such linking blocks that are arbitrarily bonded through single bonds.
The "number of atoms of the linking group that exists between the oxetane skeleton and the bicyclo ring skeleton or tricyclo ring skeleton" according to the invention refers to the number of the atoms that are used only for linking the oxetane skeleton and the bicyclo ring skeleton or tricyclo ring skeleton, within the atomic group linking these skeletons.

R¹ may be further substituted with any substituent, and examples of the substituent include an alkyl group, an allyl group, an aryl group, a hydroxyl group, an alkoxy group, and the like. Among them, an alkyl group and an alkoxy group are preferable.

R¹ may be specifically represented by the following groups.

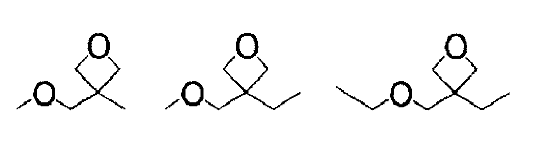

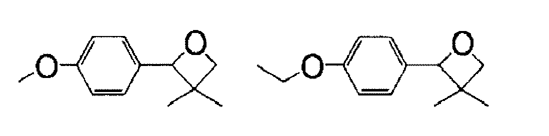

### (A: m-valent group having a bicyclo ring skeleton or tricyclo ring skeleton containing at least one oxygen atom in the ring)

A in Formula (1) represents an m-valent group having a bicyclo ring skeleton or tricyclo ring skeleton, while the bicyclo ring skeleton and tricyclo ring skeleton contain at least one oxygen atom. Further, m units of the group having an oxetane skeleton, R¹, are bonded to this A.

According to the invention, the terms "bicyclo ring" and "tricyclo ring" are aliphatic cyclic structures, and when the number of cleavages of interatomic bonds in the cyclic structure, which are required to open the cyclic structure up to a chain structure, is 3, the cyclic structure is a "tricyclo ring", and when the number is 2, the cyclic structure is a "bicyclo ring." A molecular skeleton formed from such a ring structure is referred to as a "tricyclo ring skeleton" or "bicyclo ring skeleton" in this invention. Regarding A, the atoms forming the bicyclo ring or tricyclo ring are not particularly limited except that at least one oxygen atom should be contained, but a ring formed only from oxygen atoms and carbon atoms is preferable. The total number of carbon atoms and oxygen atoms forming such a ring structure is preferably 6 to 16, and more preferably 7 to 10.

The component A of the formula may be substituted with any substituent, and examples of the substituent include an alkyl group, an allyl group, an aryl group, a hydroxyl group, an alkoxy group, and the like. Among them, an alkyl group or an alkoxy group is preferable.
The substituents included in A may be linked to each other to form a larger fused ring structure containing the bicyclo ring or tricyclo ring. Such a fused ring structure may be, for example, a tetracyclo ring or the like. Here, "tetracyclo ring skeleton" refers to the case in which the number of cleavages of interatomic bonds in the cyclic structure, which is required to open the cyclic structure up to a chain structure, is 4.

Since A has a bridged structure within the whole structure, the cured product formed by the ink composition of the invention becomes excellent in terms of hardness.
Furthermore, since the tricyclo ring skeleton or bicyclo ring skeleton included in A contains an oxygen atom, the ink composition of the invention is also excellent in terms of volatility or viscosity stability, and when the ink composition includes a pigment, the composition is also excellent in terms of pigment dispersibility.

A may be specifically represented by the following.

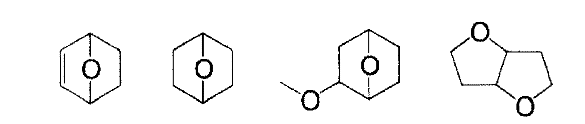

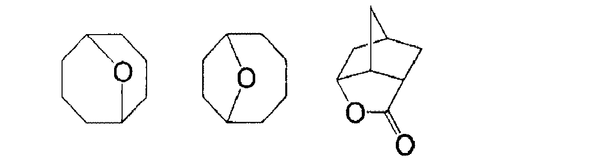

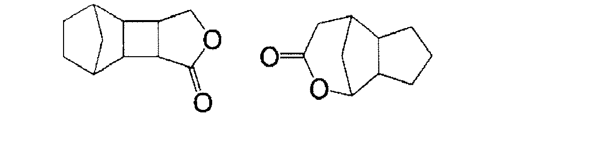

The specific polymerizable compound may be, for example, a compound obtained by substituting a hydroxyl group in an alcohol compound with an alkoxy group having an oxetane skeleton, such as the following. Specific examples include substituted or unsubstituted isosorbide, dianhydride mannitol, oxanorbomene mono(di)ol, oxanorbomene monool monomethanol, oxanorbornene mono(di)methanol, oxanorbomane mono(di)ol, oxanorbornane monool monomethanol, oxanorbomane mono(di)methanol, oxabicyclononane mono(di)ol, oxaadamantane mono(di)ol, and the like.
Among these, products synthesized from the alcohol compounds shown below are particularly preferable as the specific polymerizable compound.

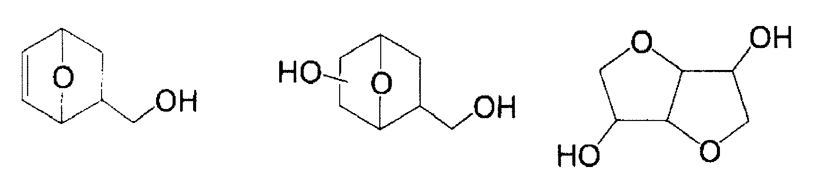

In the bicyclo ring skeleton or tricyclo ring skeleton, it is preferable that the ratio of the number of oxygen atoms to the number of carbon atoms (number of oxygen atoms/number of carbon atoms) exceeds 0.1. When such a specific polymerizable compound is used, an ink composition characterized by properties related to polarity, such as solubility or wettability on recording media, may be obtained. The ratio of the number of oxygen atoms and the number of carbon atoms (number of oxygen atoms/number of carbon atoms) is preferably from 0.16 to 0.4, and more preferably from 0.2 to 0.4.

The molecular weight of the specific polymerizable compound is preferably from 100 to 1000, more preferably from 150 to 800, and particularly preferably from 200 to 500.

Representative specific examples of the specific polymerizable compound according to the invention will be listed in the following, but the invention is not intended to be limited to these specific examples by any means.

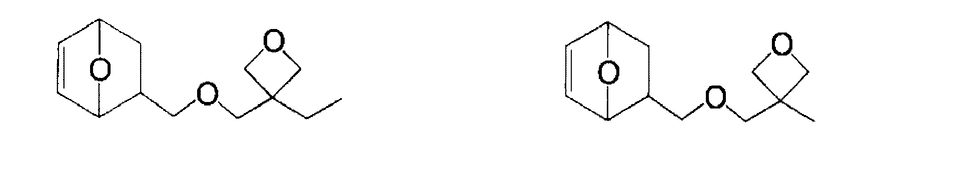

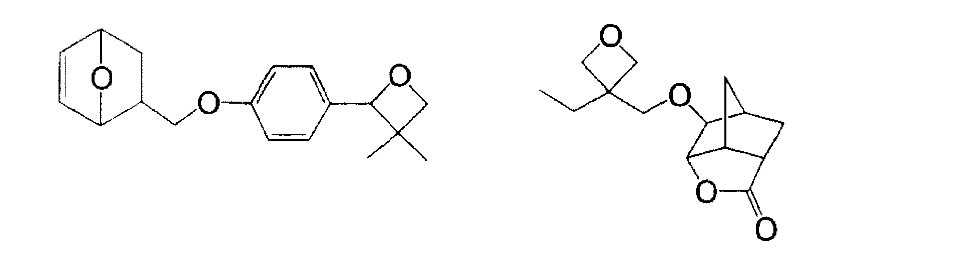

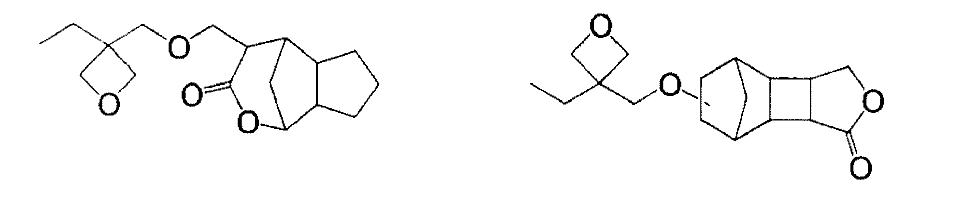

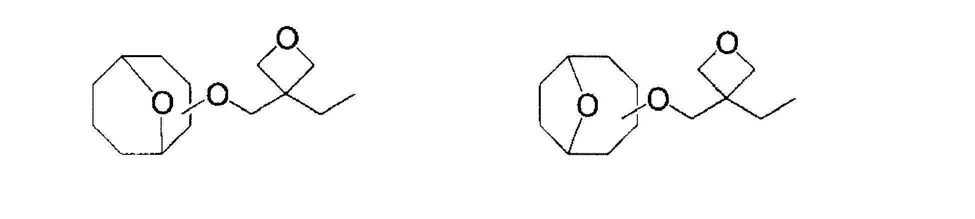

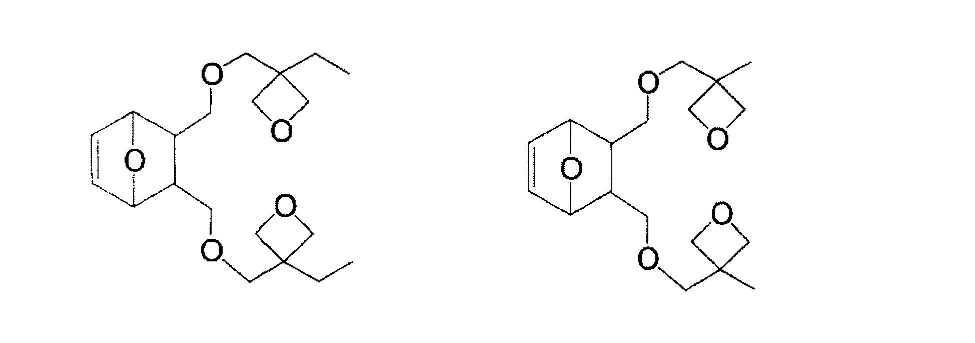

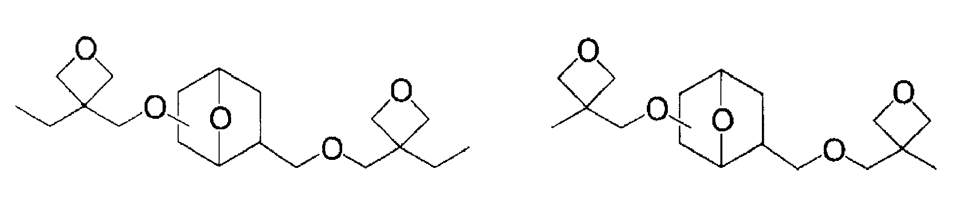

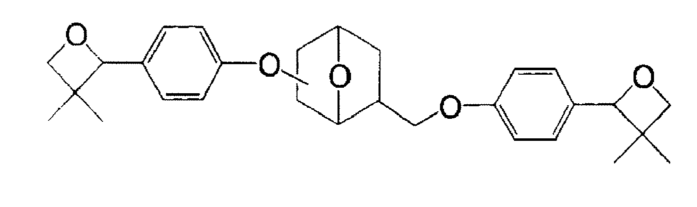

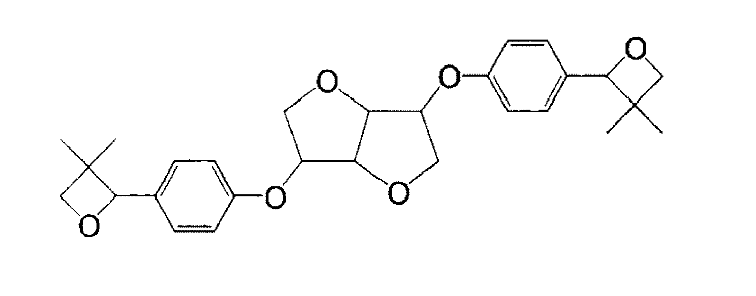

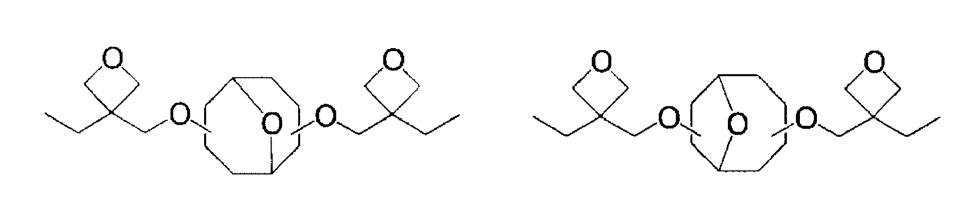

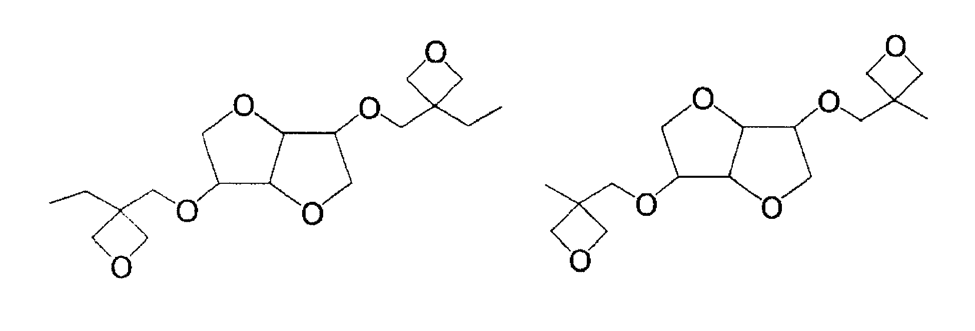

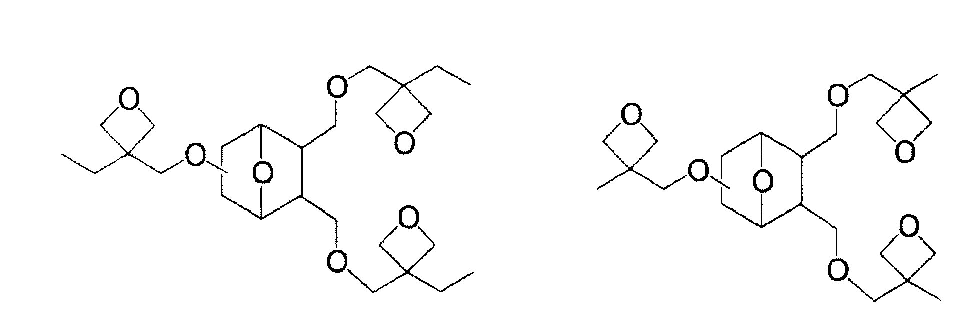

The specific polymerizable compound may be produced by, for example, an etherification reaction between an alcohol compound having a bicyclo ring skeleton or tricyclo ring skeleton such as described above, and an oxetane compound that is halogenated or has a sulfonic acid ester structure, as represented by the following Formula (2). For example, a method described in JP-A No. 2004-250434 may be mentioned.

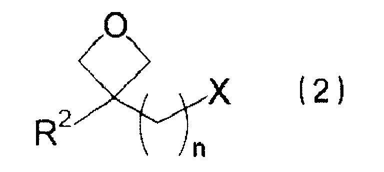

In Formula (2), R² represents a hydrogen atom or an alkyl group having 1 to 4 carbon atoms; X represents a leaving group; and n represents an integer of 1 or larger (herein, X represents, for example, a halogen atom, a sulfonic acid ester group or the like).

The specific polymerizable compound may be used singly or in combination of two or more species.

The content of the specific polymerizable compound in the ink composition of the invention is preferably from 20 to 80% by mass, and more preferably from 25 to 80% by mass, relative to the total mass of the polymerizable monomers. When the content of the specific polymerizable compound in the polymerizable monomers falls in the range mentioned above, an ink composition capable of forming a cured product having sufficient hardness after curing, and superior adhesiveness to recording media and superior flexibility, is obtained.

### (2) Oxirane compound and vinyl ether compound

The ink composition of the invention contains, together with the specific polymerizable compound, at least one compound selected from an oxirane compound and a vinyl ether compound, as the cationic polymerizable monomers.

The sensitivity and film properties of the ink composition of the invention may be further enhanced by controlling the content of the oxirane compound and/or vinyl ether compound. Specifically, the content of the oxirane compound in the ink composition of the invention is preferably from 0 to 30% by mass, and more preferably from 0 to 15% by mass, relative to the total mass of the polymerizable monomers. On the other hand, the content of the vinyl ether compound in the ink composition of the invention is preferably from 0 to 70% by mass, and more preferably from 10 to 60% by mass, relative to the total mass of the polymerizable monomers.

In the ink composition of the invention, it is more preferable that the specific polymerizable compound is used in combination with a vinyl ether compound, from the viewpoint of the curing sensitivity of the ink composition or the film properties of the cured film being formed.

Hereinafter, the oxirane compound and the vinyl ether compound that are applicable to the invention will be described in more detail.

### (2-1) Oxirane compound

Examples of the oxirane compound that is applicable to the invention include epoxy compounds such as an aromatic epoxide, an alicyclic epoxide, and an aliphatic epoxide.
The aromatic epoxide may be a di- or polyglycidyl ether that is produced by a reaction between a polyhydric phenol having at least one aromatic nucleus, or an alkylene oxide adduct thereof, and epichlorohydrin. Examples of the aromatic epoxide include a di- or polyglycidyl ether of bisphenol A or an alkylene oxide adduct thereof, a di- or polyglycidyl ether of hydrogenated bisphenol A or an alkylene oxide adduct thereof, a novolac type epoxy resin, and the like. Here, the alkylene oxide may be ethylene oxide, propylene oxide or the like.

The alicyclic epoxide may be preferably a cyclohexene oxide- or cyclopentene oxide-containing compound that is obtainable by epoxidating a compound having at least one cycloalkane ring such as cyclohexene or cyclopentene ring, with an appropriate oxidizing agent such as hydrogen peroxide or a peracid.
The aliphatic epoxide may be a di- or polyglycidyl ether of an aliphatic polyhydric alcohol or an alkylene oxide adduct thereof. Representative examples thereof include a diglycidyl ether of an alkylene glycol, such as a diglycidyl ether of ethylene glycol, a diglycidyl ether of propylene glycol or a diglycidyl ether of 1,6-hexanediol; a polyglycidyl ether of a polyhydric alcohol, such as a di- or triglycidyl ether of glycerin or an alkylene oxide adduct thereof; a diglycidyl ether of a polyalkylene glycol, represented by a diglycidyl ether of polyethylene glycol or an alkylene oxide adduct thereof and a diglycidyl ether of polypropylene glycol or an alkylene oxide thereof; and the like. Here, the alkylene oxide may be ethylene oxide, propylene oxide or the like.

Examples of the monofunctional or polyfunctional epoxy compounds that may be used in the invention will be described in detail.
Examples of the monofunctional epoxy compound include, for example, phenyl glycidyl ether, p-tert-butylphenyl glycidyl ether, butyl glycidyl ether, 2-ethylhexyl glycidyl ether, allyl glycidyl ether, 1,2-butylene oxide, 1,3-butadiene monoxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, 3-vinylcyclohexene oxide, and the like.

Examples of the polyfunctional epoxy compound include, for example, bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexane carboxylate, 2-(3,4-epoxycyclohexyl-5,5-spiro-3,4-epoxy)cyclohexane-metadioxane, bis(3,4-epoxycyclohexylmethyl) adipate, vinylcyclohexene oxide, 4-vinylepoxycyclohexane, bis(3,4-epoxy-6-methylcyclohexylmethyl) adipate, 3,4-epoxy-6-methylcyclohexyl-3',4'-epoxy-6'-methylcyclohexane carboxylate, methylenebis(3,4-epoxycylohexane), dicyclopentadiene diepoxide, di(3,4-epoxycyclohexylmethyl) ether of ethylene glycol, ethylenebis(3,4-epoxycyclohexane carboxylate), dioctyl epoxyhexahydrophthalate, di-2-ethylhexyl epoxyhexahydrophthalate, 1,4-butanediol diglycidyl ether, 1,6-hexanediol diglycidyl ether, glycerin triglycidyl ether, trimethylolpropane triglycidyl ether, polyethylene glycol diglycidyl ether, polypropylene glycol diglycidyl ethers, 1,1,3-tetradecadiene dioxide, limonene dioxide, 1,2,7,8-diepoxyoctane, 1,2,5,6-diepoxycyclooctane, and the like.

Among these epoxy compounds, aromatic epoxides and alicyclic epoxides are preferable from the viewpoint of excellent curing rate, and alicyclic epoxides are particularly preferable.

### (2-2) Vinyl ether compound

The vinyl ether compound that is applicable to the invention may be a monofunctional vinyl ether compound, or a polyfunctional vinyl ether compound such as a di-or trivinyl ether compound.
Examples of the monofunctional vinyl ether compound and the polyfunctional vinyl ether compound that are applicable to the invention will be described in detail in the following.

Examples of the monofunctional vinyl ether compound include, for example, methyl vinyl ether, ethyl vinyl ether, n-propyl vinyl ether, isopropyl vinyl ether, n-butyl vinyl ether, i-butyl vinyl ether, t-butyl vinyl ether, 2-ethylhexyl vinyl ether, n-nonyl vinyl ether, dodecyl vinyl ether, octadecyl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, phenoxypolyethylene glycol vinyl ether, cyclohexanedimethanol monovinyl ether, isopropenyl ether-o-propylene carbonate, and the like.

Examples of the polyfunctional vinyl ether include, for example, divinyl ethers such as ethylene glycol divinyl ether, diethylene glycol divinyl ether, triethylene glycol divinyl ether, polyethylene glycol divinyl ether, propylene glycol divinyl ether, dipropyelen glycol divinyl ether, butylene glycol divinyl ether, butanediol divinyl ether, hexanediol divinyl ether, bisphenol A alkylene oxide divinyl ether, bisphenol F alkylene oxide divinyl ether and cyclohexanedimethanol divinyl ether; polyfunctional vinyl ethers such as trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, ethylene oxide-added trimethylolpropane trivinyl ether, propylene oxide-added trimethylolpropane trivinyl ether, ethylene oxide-added ditrimethylolpropane tetravinyl ether, propylene oxide-added ditrimethylolpropane tetravinyl ether, ethylene oxide-added pentaerythritol tetravinyl ether, propylene oxide-added pentaerythritol tetravinyl ether, ethylene oxide-added dipentaerythritol hexavinyl ether and propylene oxide-added dipentaerythritol hexavinyl ether; and the like.

The vinyl ether compound is preferably a di- or trivinyl ether compound from the viewpoints of curability, adhesiveness to recording media, surface hardness of the formed image, and the like, and is particularly preferably a divinyl ether compound.

### (3) Other cationic polymerizable monomers

The ink composition of the invention may also contain another cationic polymerizable monomer, together with the specific polymerizable compound, oxirane compound and/or vinyl ether compound, which are essential components. The other cationic polymerizable monomer is not particularly limited as long as the monomer is a compound that initiates a polymerization reaction under the action of an acid generated from a compound that generates an acid by exposure to radiation as will be described later, and cures, and various known cationic polymerizable monomers that are known as photocationic polymerizable monomers may be used. Examples of the other cationic polymerizable monomer include the cationic polymerizable monomers that are not included in the ranges of the specific polymerizable compound, the oxirane compound and/or the vinyl ether compound, among the cationic polymerizable monomers described in JP-A Nos. 6-9714, 2001-31892, 2001-40068, 2001-55507, 2001-310938, 2001-310937, 2001-220526 and the like. For example, other oxetane compounds shown below and the like may be mentioned.

### (Other oxetane compound)

As the other oxetane compounds that may be used in combination for the invention, known oxetane compounds such as those described in JP-ANos. 2001-220526, 2001-310937 and 2003-341217 may be arbitrarily selected and used. A compound having an oxetane ring that may be used in combination with the specific polymerizable compound according to the invention is preferably a compound having 1 to 4 oxetane rings in the structure. When such a compound is used, it becomes easy to maintain the viscosity of the composition to the extent of obtaining good handlability, and when the compound is applied to an ink composition or the like, high adhesiveness between the composition after cured and a medium to be recorded may be obtained.

Examples of compounds having 1 to 2 oxetane rings in the molecule that may be used in combination for the invention include the compounds represented by the following Formulas (I) to (III), and the like.

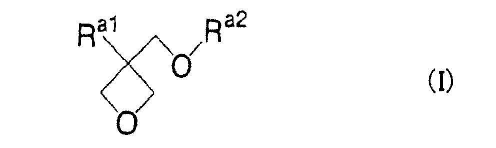

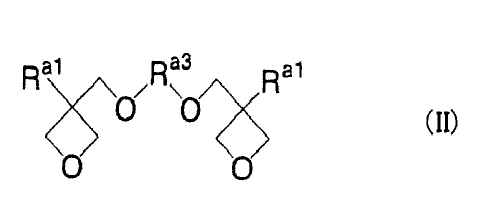

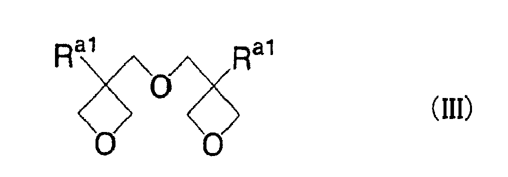

R^{a1} represents a hydrogen atom, an alkyl group having 1 to 6 carbon atoms, a fluoroakyl group having 1 to 6 carbon atoms, an allyl group, an aryl group, a furyl group or a thienyl group. When two R^{a1}'s are present in the molecule, they may be identical or different.
The alkyl group may be a methyl group, an ethyl group, a propyl group, a butyl group or the like, and the fluoroalkyl group is preferably such an alkyl group having one of the hydrogen atoms substituted with a fluorine atom.
R^{a2} represents a hydrogen atom, an alkyl group having 1 to 6 carbon atoms, an alkenyl group having 2 to 6 carbon atoms, a group having an aromatic ring, an alkylcarbonyl group having 2 to 6 carbon atoms, an alkoxycarbonyl group having 2 to 6 carbon atoms, or an N-alkylcarbamoyl group having 2 to 6 carbon atoms. The alkyl group may be a methyl group, an ethyl group, a propyl group, a butyl group, or the like, and the alkenyl group may be a 1-propenyl group, a 2-propenyl group, a 2-methyl-1-propenyl group, a 2-methyl-2-propenyl group, a 1-butenyl group, a 2-butenyl group, a 3-butenyl group, or the like. The group having an aromatic ring may be a phenyl group, a benzyl group, a fluorobenzyl group, a methoxybenzyl group, a phenoxyethyl group, or the like. The alkylcarbonyl group may be an ethylcarbonyl group, a propylcarbonyl group, a butylcarbonyl group, or the like, and the alkoxycarbonyl group may be an ethoxycarbonyl group, a propoxycarbonyl group, a butoxycarbonyl group or the like. The N-alkylcarbamoyl group may be an ethylcarbamoyl group, a propylcarbamoyl group, a butylcarbamoyl group, a pentylcarbamoyl group, or the like. R^{a2} may be substituted with a substituent, and the substituent may be an alkyl group having 1 to 6 carbon atoms, or a fluorine atom.

R^{a3} represents a linear or branched alkylene group, a linear or branched unsaturated hydrocarbon group, a carbonyl group or an alkylene group containing a carbonyl group, an alkylene group containing a carboxyl group, an alkylene group having a carbamoyl group, or the groups shown below. Examples of the alkylene group include an ethylene group, a propylene group and a butylene group, and examples of the poly(alkyleneoxy) group include a poly(ethyleneoxy) group, a poly(propyleneoxy) group, and the like. Examples of the unsaturated hydrocarbon group include a propenylene group, a methylpropenylene group, a butenylene group, and the like.

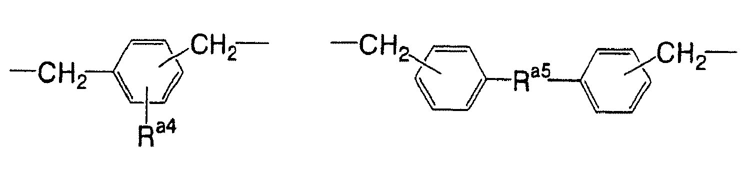

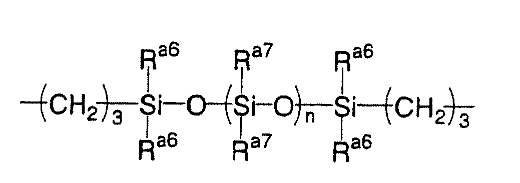

When R^{a3} is one of the polyvalent groups shown above, R^{a4} represents a hydrogen atom, an alkyl group having 1 to 4 carbon atoms, an alkoxy group having 1 to 4 carbon atoms, a halogen atom, a nitro group, a cyano group, a mercapto group, a lower alkylcarboxyl group, a carboxyl group, or a carbamoyl group.
R^{a5} represents an oxygen atom, a sulfur atom, a methylene group, NH, SO, SO₂, C(CF₃)₂, or C(CH₃)₂.
R^{a6} represents an alkyl group having 1 to 4 carbon atoms or an aryl group, and n is an integer from 0 to 2,000. R^{a7} represents an alkyl group having 1 to 4 carbon atoms, an aryl group, or a monovalent group having the following structure. In the following structure, R^{a8} represents an alkyl group having 1 to 4 carbon atoms or an aryl group, and m is an integer from 0 to 100.

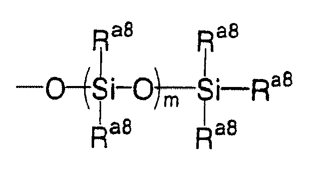

The compound represented by Formula (I) may be 3-ethyl-3-hydroxymethyloxetane (trade name: OXT-101, manufactured by Toagosei Co., Ltd.), 3-ethyl-3-(2-ethylhexyloxymethyl)oxetane (trade name: OXT-212, manufactured by Toagosei Co., Ltd.), or 3-ethyl-3-phenoxymethyloxetane (trade name: OXT-211, manufactured by Toagosei Co., Ltd.). The compound represented by Formula (II) may be 1,4-bis[(3-ethyl-3-oxetanylmethoxy)methyl]benzene (trade name: OXT-121, manufactured by Toagosei Co., Ltd.). The compound represented by Formula (III) may be bis(3-ethyl-3-oxetanylmethyl) ether (trade name: OXT-221, manufactured by Toagosei Co., Ltd.).

A compound having 3 to 4 oxetane rings may be a compound represented by the following Formula (IV).

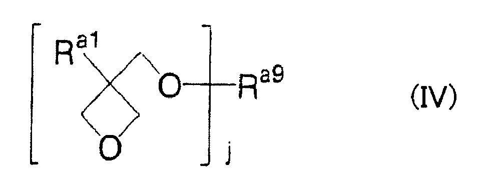

In Formula (IV), R^{a1} has the same definition as R^{a1} in Formula (I). The polyvalent linking group R^{a9} may be, for example, a branched alkylene group having 1 to 12 carbon atoms, such as the groups represented by the following groups A to C, a branched poly(alkyleneoxy) group such as a group represented by the following group D, a branched polysiloxy group such as a group represented by the following group E, or the like. j is 3 or 4.

| | |
|---|---|
| A | 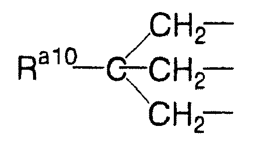 |
| B | 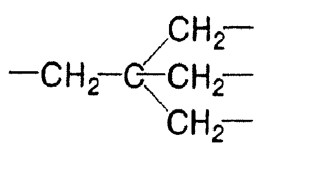 |
| C | 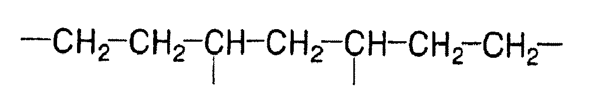 |
| D | 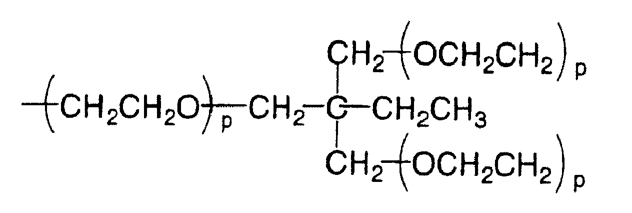 |
| E | 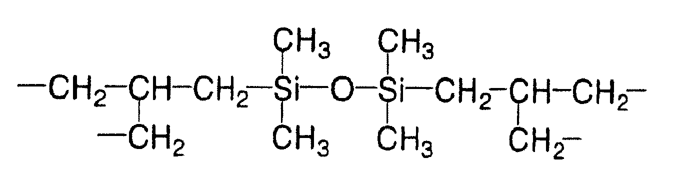 |

In the group A, R^{a10} represents a methyl group, an ethyl group or a propyl group. In the group D, p is an integer from 1 to 10.

Another example of the oxetane compound that may be suitably used in the invention, may be a compound represented by Formula (5) having oxetane ring in a side chain.

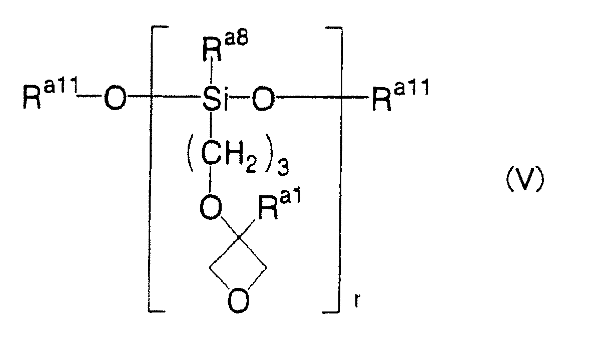

In Formula (V), R^{a1} and R^{a8} have the same definitions as R^{a1} and R^{a8} in the formulas described above, respectively. R^{a11} is an alkyl group having 1 to 4 carbon atoms, such as a methyl group, an ethyl group, a propyl group or a butyl group, or a trialkylsilyl group; and r is from 1 to 4.

These compounds having oxetane rings are described in detail in paragraphs (0021) to (0084) of JP-A No. 2003-341217, and the compounds described therein may also be suitably used in this invention.
The oxetane compounds described in JP-A No. 2004-91556 may also be used in combination in this invention. These compounds are described in detail in paragraphs (0022) to (0058) of the same patent document.

Among the other oxetane compounds used in combination in this invention, it is preferable to use a compound having one oxetane ring, from the viewpoint of the viscosity and tackiness of the composition.

It is preferable that at least one cationic polymerizable monomer contained in the ink composition of the invention be a monofunctional compound. When a monofunctional compound is contained, the film properties of the resulting cured product may be controlled. Here, the content of the monofunctional compound contained in the ink composition of the invention is preferably 10 to 70% by mass, and more preferably 15 to 70% by mass, relative to the total mass of the polymerizable monomer.

### 1-2. Compounds that generate an acid by exposure to radiation

The ink composition of the invention preferably contains a compound that generates an acid by exposure to radiation (hereinafter, may be referred to as "photoacid generator"). According to the invention, a polymerization reaction of the polymerizable compound described above occurs under the action of an acid generated upon irradiation with a radiation, and the ink composition cures.
As for the photoacid generator, a compound that generates an acid by exposure to a light being used for photoinitiators for photocationic polymerization, photoinitiators for photoradical polymerization, photodecolorants for colored matters, photochromic agent, microresists or the like (ultraviolet radiation at 400 to 200 nm, far-ultraviolet radiation, particularly preferably g-rays, h-rays, i-rays, or KrF excimer laser light), ArF excimer laser light, electron beams, X-rays, molecular beams, ion beams or the like, may be appropriately selected and used.

Examples of such a photoacid generator include onium salt compounds such as a diazonium salt, a phosphonium salt, a sulfonium salt and an iodonium salt that generates an acid by exposure to radiation; sulfonate compounds such as imidesulfonate, oximesulfonate, diazodisulfone, disulfone and o-nitrobenzyl sulfonate; and the like.

The photoacid generator may be used singly or in combination of two or more species.
The content of the photoacid generator in the ink composition of the invention is preferably 0.1 to 20% by mass, more preferably 0.5 to 10% by mass, and 1 to 7% by mass, relative to the total solids content of the ink composition.

### 1-3. Colorant

The ink composition of the invention preferably contains a colorant so as to obtain colored images. The colorant that may be used in the invention is not particularly limited, but pigments and oil-soluble dyes having excellent weather resistance and rich color reproducibility are preferable, and they may be selected from any known colorants such as soluble dyes for use. It is preferable that the colorants that may be suitably used in the ink composition of the invention do not function as polymerization inhibitors against the polymerization reaction which is a curing reaction. This is because a decrease in the sensitivity of the curing reaction under the action of active radiation due to the colorant is not desirable.

### (Pigment)

The pigment is not particularly limited, and in general, all commercially available organic pigments and inorganic pigments, or pigments dispersed in insoluble resins as dispersion media, pigments having resins grafted to the pigment surface, and the like may be used. Resin particles dyed with dyes, and the like may also be used.
Examples of these pigments include the pigments described in " Ganryo no Jiten (Dictionary of Pigments)," edited by Seishiro Ito, (published in 2000), W. Herbst and K. Hunger, "Industrial Organic Pigments," JP-ANos. 2002-12607, 2002-188025, 2003-26978 and 2003-342503.

Specific examples of the organic pigments and inorganic pigments that may be used in the invention include the compounds described in, for example, paragraphs (0126) to (0131) of JP-A No. 2008-13646.

In regard to the dispersion of pigment, for example, dispersing apparatuses such as a ball mill, a sand mill, an attriter, a roll mill, a jet mill, a homogenizer, a paint shaker, a kneader, an agitator, a Henschel mixer, a colloid mill, an ultrasonic homogenizer, a pearl mill and a wet jet mill, may be used.
When the dispersion of pigment is carried out, a dispersant may be added. Examples of the dispersant include a hydroxyl group-containing carboxylic acid ester, a salt of a long-chain polyaminoamide and a high molecular weight acid ester, a high molecular weight polycarboxylic acid salt, a high molecular weight unsaturated acid ester, a macromolecular copolymerization product, a modified polyacrylate, an aliphatic polyvalent carboxylic acid, a naphthalenesulfonic acid-formalin condensate, a polyoxyethylene alkyl phosphate ester, a pigment derivative, and the like. It is also preferable to use commercially available macromolecular dispersants such as the SOLSPERSE series manufactured by Zeneca Group plc.
Synergists according to various pigments may also be used as auxiliary dispersants. These dispersants and auxiliary dispersants are preferably added in an amount of 1 to 50 parts by mass relative to 100 parts by mass of the pigment.

In regard to the ink composition, a solvent may be added as a dispersion medium for general components such as pigments, or in a solventless state, a cationic polymerizable compound which is a low molecular weight component may also be used as a dispersion medium. However, since the ink composition applicable to the invention is a radiation-curable type ink, and since the ink is cured after being applied on a medium to be recorded, it is preferable that the ink composition be solventless. This is because if the solvent remains behind in a cured ink image, the solvent resistance is deteriorated, or there occurs a problem regarding the VOC (volatile organic compounds) of the remaining solvent. From this point of view, a cationic polymerizable compound is used as the dispersion medium, and among such compounds, it is preferable to select a cationic polymerizable monomer having the lowest viscosity, from the viewpoint of enhancing the dispersion suitability or the handlability of the ink composition.

The average particle size of the pigment is preferably in the range of 0.02 µm to 0.4 µm, more preferably 0.02 m to 0.1 µm, and even more preferably 0.02 µm to 0.07 µm.
The selection, dispersion conditions and filtration conditions for the pigment, dispersant and dispersion medium are set up so that the average particle size of the pigment particles would fall in the preferable range mentioned above. Through this management of particle size, clogging of the head nozzles is suppressed, and the storage stability, ink transparency and curing sensitivity of the ink may be maintained.

### (Dye)

The dye that may be used in the invention is preferably oil-soluble. Specifically, it means that the solubility in water (mass of a colored matter dissolved in 100 g of water) at 25°C is 1 g or less, preferably 0.5 g or less, and more preferably 0.1 g or less. Therefore, oil-soluble dyes that are insoluble in water are preferably used.

In order to dissolve the dye that may be used in the invention in the ink composition in a required amount, it is also preferable to introduce an oil-solubilizing group into the mother nucleus of the dye described above.
The oil-solubilizing group may be a long-chain branched alkyl group, a long-chain branched alkoxy group, a long-chain branched alkylthio group, a long-chain branched alkylsulfonyl group, a long-chained branched acyloxy group, a long-chain branched alkoxycarbonyl group, a long-chain branched acyl group, a long-chain branched acylamino group, a long-chain branched alkylsulfonylamino group, a long-chain branched alkylaminosulfonyl group, and an aryl group, an aryloxy group, an aryloxycarbonyl group, an arylcarbonyloxy group, an arylaminocarbonyl group, an arylaminosulfonyl group, an arylsulfonylamino group and the like, which contain these long-chain branched substituents, and the like.
Also, dyes may also be obtained by converting the acid moieties of water-soluble dyes having carboxylic acid or sulfonic acid, into an alkoxycarbonyl group, an aryloxycarbonyl group, an alkylaminosulfonyl group, or an arylaminosulfonyl group, which are oil-solubilizing groups, using a long-chain branched alcohol, amine, phenol or aniline derivative.

As for the oil-soluble dye, a dye having a melting point of 200°C or lower is preferable, a dye having a melting point of 150°C or lower is more preferably, and a dye having a melting point of 100°C or lower is even more preferable. When an oil-soluble dye having a melting point is used, precipitation of crystals of a colored matter in the ink composition is suppressed, and the storage stability of the ink composition is improved.
It is also desirable that the oxidation potential be high, so as to enhance the resistance to discoloration, and particularly to oxidative substances such as ozone, or to enhance the curing characteristics. For this reason, among the oil-soluble dyes used in the invention, those having an oxidation potential of 1.0 V (versus saturated calomel electrode (SCE)) or higher, are preferably used. A higher oxidation potential value is more preferable, and an oil-soluble dye having an oxidation potential of 1.1 V (versus SCE) or higher is more preferable, while one having an oxidation potential of 1.15 V (versus SCE) or higher is particularly preferable.

As for yellow dyes, those compounds having a structure represented by Formula (Y-I) as described in JP-A No. 2004-250483 are preferable.
Particularly preferable dyes are the dyes represented by formulas (Y-II) to (Y-IV) described in paragraph (0034) of JP-A No. 2004-250483, and specific examples include the compounds described in paragraphs (0060) to (0071) of JP-A No. 2004-250483. Furthermore, the oil-soluble dyes of Formula (Y-I) described in the same patent document may be used not only for yellow inks, but also for inks of any color, such as black inks and red inks.

As for magenta dyes, those compounds having a structure represented by Formula (3) or (4) as described in JP-A No. 2002-114930 are preferable, and specific examples include the compounds described in paragraphs (0054) to (0073) of JP-A No. 2002-114930.
Particularly preferable dyes are the azo dyes represented by formulas (M-1) to (M-2) described in paragraphs (0084) to (0122) of JP-A No. 2002-121414, and specific examples include the compounds described in paragraphs (0123) to (0132) of JP-A No. 2002-121414. The oil-soluble dyes of the formulas (3) , (4), (M-1) and (M-2) described in the same patent document may be used not only for magenta inks, but also for inks of any color such as black inks and red inks.

As for cyan dyes, those dyes represented by formulas (I) to (IV) as described in JP-A No. 2001-181547, and the dyes represented by the formulas (IV-1) to (IV-4) as described in paragraphs (0063) to (0078) of JP-A No. 2002-121414 are mentioned as preferable dyes, and specific examples include the compounds described in paragraphs (0052) to (0066) of JP-A No. 2001-181547 and paragraphs (0079) to (0081) of JP-A No. 2002-121414.
Particularly preferable dyes are the phthalocyanine dyes represented by formulas (C-I) and (C-II) described in paragraphs (0133) to (0196) of JP-A No. 2002-121414, and the phthalocyanine dyes represented by Formula (C-II) are more preferable. Specific examples thereof include the compounds described in paragraphs (0198) to (0201) of JP-A No. 2002-121414. The oil-soluble dyes of the formulas (I) to (IV), (IV-1) to (IV-4), (C-I) and (C-II) may be used not only for cyan inks, but also for inks of any color such as black inks and green inks.

These colorants are added preferably in an amount of 1 to 20% by mass, and more preferably 2 to 10% by mass, relative to the solids content in the ink composition.

### 1-4. Additives

Hereinafter, various additives that may be used as necessary in the ink composition of the invention, will be described.

### (Ultraviolet absorbent)

The ink composition of the invention may use an ultraviolet absorbent from the viewpoints of enhancing the weather resistance of resulting images (cured products) and preventing discoloration.
Examples of the ultraviolet absorbent include the benzotriazole-based compounds described in JP-A Nos. 58-185677, 61-190537, 2-782, 5-197075, 9-34057 and the like; the benzophenone-based compounds described in JP-A Nos. 46-2784 and 5-194483, US Patent No. 3214463, and the like; cinnamic acid-based compounds described in Japanese Patent Application Publication (JP-B) Nos. 48-30492 and 56-21141, JP-A No. 10-88106 and the like; triazine-based compounds described in JP-ANos. 4-298503, 8-53427, 8-239368 and 10-182621, Japanese Patent Application National Publication (Laid-Open) No. 8-501291, and the like; the compounds described in Research Disclosure No. 24239; compounds that absorb ultraviolet radiation and emit fluorescence, as represented by stilbene-based and benzoxazole-based compounds, that is, so-called fluorescent whitening agents; and the like.
The amount of addition of the ultraviolet absorbent is appropriately selected according to the purpose, but in general, the amount is preferably from 0.5 to 15% by mass in terms of solids content.

### (Sensitizer)

The ink composition of the invention may be added with a sensitizer according to necessity, for the purpose of enhancing the acid generation efficiency of photoacid generators and shifting the photosensitization wavelength to longer wavelengths.
Any sensitizer may be used as long as it sensitizes a photoacid generator through an electron transfer mechanism or energy transfer mechanism. Preferable examples include aromatic polycondensed ring compounds such as anthracene, 9,10-dialkoxyanthracene, pyrene and perylene; aromatic ketone compounds such as acetophenone, benzophenone, thioxanthone and Michler's ketone; and heterocyclic compounds such as phenothiazine and N-aryloxazolidinone.
The amount of addition of the sensitizer is appropriately selected according to the purpose, but it is preferable to use the sensitizer in an amount of from 0.01 to 1% by mole, and more preferably from 0.1 to 0.5% by mole, based on the photoacid generator.

### (Antioxidant)

The ink composition may be added with an antioxidant for the purpose of enhancing stability of the composition.
Examples of the antioxidant include the compounds described in EP Nos. 223739, 309401, 309402, 310551, 310552 and 459416, DE No. 3435443, JP-ANos. 54-48535, 62-262047, 63-113536, 63-163351, 2-262654, 2-71262, 3-121449, 5-61166 and 5-119449, US Patent Nos. 4814262 and 4980275, and the like.
The amount of addition of the antioxidant is appropriately selected according to the purpose, but the amount is preferably from 0.1 to 8% by mass in terms of solids content.

### (Discoloration preventing agent)

The ink composition of the invention may use various organic and metal complex-based discoloration preventing agents.
Examples of the organic discoloration preventing agent include hydroquinones, alkoxyphenols, dialkoxyphenols, phenols, anilines, amines, indanes, chromanes, alkoxyanilines, heterocycles, and the like.
Examples of the metal complex-based discoloration preventing agent include nickel complexes, zinc complexes and the like, and specifically, the compounds described in the patent documents cited in Research Disclosure No. 17643, items VII-I to J; No. 15162; No. 18716, page 650, left column; No. 36544, page 527; No. 307105, page 872; and No. 15162, or compounds included in the formula and compound examples of the representative compounds described in JP-A No. 62-215272, pp. 127-137, may be used.
The amount of addition of the discoloration preventing agent is appropriately selected according to the purpose, but the amount is preferably 0.1 to 8% by mass in terms of solids content.

### (Electroconductive salts)

The ink composition of the invention may be added with electroconductive salts such as potassium thiocyanate, lithium nitrate, ammonium thiocyanate, and dimethylamine hydrochloride, for the purpose of controlling the jetting properties.

### (Solvent)

It is also effective to add a trace amount of an organic solvent to the ink composition of the invention so as to improve the adhesiveness to recording media.
Examples of the solvent include ketone-based solvents such as acetone, methyl ethyl ketone and diethyl ketone; alcohol-based solvents such as methanol, ethanol, 2-propanol, 1-propanol, 1-butanol and tert-butanol; chlorine-based solvents such as chloroform and methylene chloride; aromatic solvents such as benzene and toluene; ester-based solvents such as ethyl acetate, butyl acetate and isopropyl acetate; ether-based solvents such as diethyl ether, tetrahydrofuran and dioxane; glycol ether-based solvents such as ethylene glycol monomethyl ether and ethylene glycol dimethyl ether; and the like.
In the case of adding a solvent, an addition to the extent of not causing a problem concerning solvent resistance or VOC, is effective. The amount is preferably in the range of 0.1 to 5% by mass, and more preferably 0.1 to 3% by mass, based on the whole ink composition.

### (Macromolecular compound)

The ink composition of the invention may be added with various macromolecular compounds so as to adjust the properties of the films formed when the composition cures.
Examples of the macromolecular compound that may be used include acrylic polymers, polyvinyl butyral resins, polyurethane resins, polyamide resins, polyester resins, epoxy resins, phenolic resins, polycarbonate resins, polyvinyl butyral resins, polyvinyl formal resins, shellac, vinyl-based resins, acrylic resins, rubber-based resins, waxes, other naturally occurring resins, and the like. These also may be used in combination of two or more species. Among these, vinyl-based copolymers obtainable by copolymerization of acrylic monomers are preferable. Furthermore, copolymers including "carboxylic group-containing monomers," "methacrylic acid alkyl esters," or "acrylic acid alkyl esters" as structural units are also preferably used for the copolymer composition of macromolecular binding materials.

### (Surfactant)

The ink composition of the invention may be added with a surfactant.
Examples of the surfactant include those described in JP-A Nos. 62-173463 and 62-183457. For example, there may be mentioned anionic surfactants such as dialkylsulfosuccinates, alkylnaphthalenesulfonates, and fatty acid salts; nonionic surfactants such as polyoxyethylene alkyl ethers, polyoxyethylene alkyl allyl ethers, acetylene glycols, and polyoxyethylene-polyoxypropylene block copolymers; and cationic surfactants such as alkylamine salts and quaternary ammonium salts. In addition, organic fluorocompounds may also be used instead of the surfactants mentioned above. The organic fluorocompounds are preferably hydrophobic. Examples of the organic fluorocompounds include fluorine-based surfactants, oily fluorine-based compounds (for example, fluorine oil) and solid fluorine compound resins (for example, ethylene tetrafluoride resin), and those described in JP-B No. 57-9053 (columns 8 to 17) and JP-A No. 62-135826.

### (Other additives)

In addition to the components above, the ink composition of the invention may contain, for example, a leveling additive, a mattifying agent, a wax for adjusting the film properties, a tackifier that improves the adhesiveness to recording media but does not inhibit polymerization, such as polyolefm or PET, and the like according to necessity.

Specific examples of the tackifier include the high molecular weight adhesive polymers described in pages 5 to 6 of JP-A No. 2001-49200 (for example, an ester of (meth)acrylic acid and an alcohol having an alkyl group having 1 to 20 carbon atom, an ester of (meth)acrylic acid and an alicyclic alcohol having 3 to 14 carbon atoms, or a copolymer formed from an ester of (meth)acrylic acid and an aromatic alcohol having 6 to 14 carbon atoms), low molecular weight tackifying resins having polymerizable unsaturated bonds, and the like.

### 1-5. Preferable properties of ink composition

When the ink composition of the invention is to be applied to inkjet recording, the ink viscosity at a temperature at the time of jetting is preferably from 5 mPa·s to 30 mPa·s, and more preferably from 7 mPa·s to 20 mPa·s, in consideration of jetting properties. For this reason, it is preferable to appropriately adjust and determine the composition ratios to fall in the range mentioned above.
The viscosity of the ink composition at room temperature (25°C to 30°C) is preferably from 7 to 120 mPa·s, and more preferably from 10 to 80 mPa·s. When the viscosity at room temperature is set high, even if a porous medium to be recorded is used, ink penetration into the medium to be recorded is prevented, and thus a reduction in the level of uncured monomer and a reduction in the level of odor are made possible. Furthermore, dot bleeding upon the impact of ink liquid droplets may be suppressed, and as a result, the image quality may be improved.

The surface tension of the ink composition of the invention is preferably from 20 mN/m to 40 mN/m, and more preferably from 20 mN/m to 30 mN/m. When the ink composition of the invention is used to perform recording on various recording media, such as polyolefin, PET, coated paper and non-coated paper, the surface tension is preferably 20 mN/m or more from the viewpoint of bleeding and penetration, and is more preferably 30 mN/m or less from the viewpoint of wettability.

The ink composition of the invention may be suitably used as an ink for inkjet recording.
The inkjet recording system is not particularly limited, and may be any of, for example, a charge control system which jets an ink by using electrostatic attractive force; a drop-on-demand system which uses the vibration pressure of a piezoelectric element (pressure pulse system); an acoustic type inkjet system which converts an electric signal into an acoustic beam, irradiates an ink with the acoustic beam, and jets an ink by using a radiation pressure; a thermal type inkjet system which forms air bubbles by heating an ink, and using a pressure generated thereby; and the like. Furthermore, the inkjet recording system also includes a system of jetting an ink having a low concentration, called a photo ink, in the form of a large number of small-volume droplets; a system of improving the image quality using plural inks that have substantially the same color but different concentrations; or a system of using a colorless transparent ink.
Among the systems described above, the ink composition of the invention is suitable as an ink for inkjet recording for the drop-on-demand system (pressure pulse system) using a piezoelectric element.

### 2. Inkjet recording method and recorded matter

The ink composition of the invention may be used in an inkjet recording method including a process of jetting the ink composition on a medium to be recorded using an inkjet recording apparatus (image recording process), and a process of exposing the jetted ink composition to active energy rays to cure the ink composition (image curing process).
That is, the inkjet recording method of the invention is a method including an image recording process of forming an image by inkjet recording, and an image curing process.

In the image curing process, an active energy ray is used for the image curing process, and curing by polymerization of a polymerizable compound which contributes to imaging are carried out by recording an image on a medium to be recorded in the image recording process, and then exposing the recorded image to an active energy ray. Thus, a satisfactorily cured image having high fastness may be formed.
In the image curing process, there may be carried out an exposure treatment of accelerating the curing by polymerization using a light source that emits an active energy ray having a wavelength in the region corresponding to the sensitization wavelength of the ink composition. The light source, exposure time and amount of light may be appropriately selected in accordance with the degree of curing by polymerization of a polymerizable compound such as the cationic polymerizable monomer according to the invention.

In the image curing process, the thickness of a cured image is preferably 2 µm to 30 µm. Here, the "thickness of an image" is the thickness of a cured product obtained by curing an image formed from the ink composition. When the thickness of an image is 2 µm to 30 µm, images from low density to high density may be expressed.

In the image curing process, there may be carried out an exposure treatment of accelerating the curing by polymerization using a light source that emits an active energy ray having a wavelength in the region corresponding to the sensitization wavelength of the ink composition. Specifically, the exposure treatment may be suitably carried out using a light source that emits an active ray having a wavelength belonging to the wavelength region of 250 to 450 nm, and preferably 365±20 nm, for example, an LD, an LED (light emitting diode), a fluorescent lamp, a low pressure mercury lamp, a high pressure mercury lamp, a metal halide lamp, a carbon arc lamp, a xenon lamp, a chemical lamp or the like. A preferable light source may include an LED, a high pressure mercury lamp, and a metal halide lamp.

A recorded matter obtained from the ink composition of the invention has its image portions cured by exposure to a radiation such as ultraviolet radiation, and the strength of the image portions is excellent. Thus, the recorded material may be used as an ink receiving layer (image portion) of a planographic printing plate.

In the image recording process, it is preferable to apply an inkjet recording method using an inkjet recording apparatus such as an inkjet printer. Specifically, the image recording process preferably involves recording an image using an inkjet recording apparatus that jets the inkjet composition of the invention.

Next, specific exemplary embodiments of the inkjet recording method of the invention will be described in the following, including the details of an inkjet recording apparatus that may be suitably employed in the method.

### • System

An inkjet recording system that jets an ink may be exemplified by the forms shown in JP-A No. 2002-11860, but is not limited to these, and may also be in other forms.

### • Ink retaining unit

A unit that retains an ink is preferably one fillable in known ink cartridges, and may also be contained in a deformable container to form a tank, as disclosed in JP-A No. 5-16377. Also, as disclosed in JP-A No. 5-16382, if the unit is equipped with a subtank, supply of ink to the head is more stabilized. As disclosed in JP-A No. 8-174860, a cartridge in the form of supplying ink based on the movement of a valve when the pressure in the ink supply chamber is decreased, may also be used. As a method of applying a negative pressure in order to appropriately maintain the meniscus in the head in these ink retaining units, a method based on the height of the ink retaining unit, that is, the hydraulic head pressure; a method based on the capillary force of a filter provided in the ink flow channel; a method of controlling the pressure using a pump or the like; a method of maintaining the ink in an ink absorber and applying a negative pressure by means of its capillary force, as disclosed in JP-A No. 50-74341; and the like are suitable.

### • Ink supply channel

The method of supplying ink from such an ink retaining unit to a head may be a method of directly connecting the retaining unit to a head unit, or a method of connecting the retaining unit via a flow channel such as a tube. These ink retaining units and flow channels are preferably formed from a material such as a material having satisfactory wettability with ink, or a material that has been subjected to a surface treatment.

### Head

The method of striking ink droplets may be a method of continuously jetting ink droplets and selectively controlling as to whether to strike the droplets slantingly on a medium to be recorded in accordance with the image, as disclosed in JP-A No. 5-104725, or may be a method of jetting ink droplets only onto the portions necessary in an image, which is a so-called on-demand system. The on-demand system may be a system of jetting ink droplets by generating an ink pressure through deformation of a structure using a piezoelectric element or the like, as disclosed in JP-A No. 5-16349, or may be a system of jetting ink droplets under a pressure that is generated by expansion as a result of vaporization due to thermal energy, as disclosed in JP-A No. 1-234255. Furthermore, as disclosed in JP-A No. 2001-277466, the system may also be a system of controlling jetting onto a medium to be recorded under the action of an electric field.

In the inkjet recording method, image recording performed on a medium to be recorded using the ink composition of the invention, but there is no particular limitation on the ink jet nozzle used at that time, and the nozzle may be appropriately selected according to the purpose. A nozzle in the form such as described in, for example, JP-A No. 5-31908 is applicable. In this case, when nozzles are configured in plural rows as described in JP-A No. 2002-316420 in order to jet inks of plural colors, forming a colored image at high speed is made possible, and if plural head units having plural nozzle rows are disposed, a further increase in the speed may be achieved.

Furthermore, as described in JP-A No. 63-160849, when nozzles are arranged at a width interval equal to or greater than the width of the image to form a so-called line head, and a medium to be recorded is moved simultaneously with striking of ink droplets from these nozzles, images may be formed at high speed.
If the surfaces of the nozzles are subjected to a surface treatment such as disclosed in JP-A No. 5-116327, attachment of airborne ink droplets to the nozzle surface and attachment of ink droplets may be prevented.

Even if such a treatment is applied, more dirt may be attached, and for this reason, it is preferable to perform cleaning using a blade as disclosed in JP-A No. 6-71904.
There is no limit as to whether inks of various colors are equally jetted from the nozzles, but in some cases, some particular inks may not be jetted for a long time. In such an instance, in order to maintain the meniscus stably, it is preferable to maintain the ink properties at an adequate value by appropriately jetting the ink to the outside of the image area, and supplying new ink to the head.

Even if such a treatment is applied, air bubbles may penetrate into the head, or air bubbles may be generated in the head. In such a case, as described in JP-A No. 11-334092, if ink is forcibly aspirated from the outside of the head, the ink having changed properties is discarded, and at the same time, the air bubbles may be discharged out of the head. When ink droplet strike does not occur for a longer time, the nozzle surface may be protected by covering the nozzle surface with a cap, as disclosed in JP-A No. 11-138830. In some cases, jetting may not occur even if these measures are taken.
When an image is printed in a state where some of the nozzles do not jet, there arises a problem that unevenness occurs in the image. In order to avoid such situation, it is effective to detect any nozzle that does not jet, and to take measures, as disclosed in JP-A No. 2000-343686.

When overlapped droplet strike is carried out by mechanically moving the head unit, and synchronously moving the medium to be recorded intermittently in a perpendicular direction as described in JP-A No. 6-115099, it is effective in making hardly visible of the unevenness resulting from the poor accuracy in the intermittent movement of the medium to be recorded, and realization of high image quality is made possible. In this case, the relationship between the image quality and the recording speed may be established into a preferable relationship by appropriately balancing the relationship between the speed of head movement, the extent of movement of the medium to be recorded, and the number of nozzles.

Furthermore, on the contrary, when the head is fixed, and the medium to be recorded is mechanically made to move in a shuttling manner in a predetermined direction, and at the same time, made to move intermittently in a direction perpendicular to the predetermined direction, a similar effect may be obtained.

### • Temperature control

It is preferable that the inkjet recording apparatus be equipped with a unit that stabilizes the temperature of the ink composition, and the region of the apparatus to be maintained at a constant temperature includes all members in the piping system covering from the ink tank (including an intermediate tank, if present) to the nozzle ejection surface.

In the inkjet recording method, it is preferable to heat the ink composition to 40 to 80°C to decrease the viscosity of the ink composition down to 30 mPa·s or less, and preferably 20 mPa·s or less, and then to perform jetting. High jetting stability may be realized by using this method. In general, since radiation-curable ink compositions commonly have higher viscosities than those of aqueous inks, the range of fluctuation in the viscosity due to the fluctuation in temperature at the time of printing is large. Since this viscosity fluctuation of the ink composition directly exerts a large influence on the size of liquid droplets and the speed of liquid droplet jetting, and thereby causes deterioration in the image quality, the temperature of the ink composition at the time of printing is necessarily maintained as constant as possible. Therefore, it is preferable to have an ink temperature detecting unit, an ink heating unit, and a control unit that controls heating in accordance with the detected ink temperature.

The method of controlling the temperature is not particularly limited, but it is preferable to control heating in accordance with the flow rate of the ink composition and the environmental temperature, by providing plural temperature sensors at various piping sites. Furthermore, the head unit that is heated is preferably thermally shielded or insulated, so that the apparatus body is not under the influence of the temperature of the outside air. In order to shorten the start-up time of the printer that is required in heating, or to reduce a loss in thermal energy, it is preferable to carry out insulation from other sites, and also to decrease the overall heat capacity of the heating unit.
Alternatively, it is also suitable to have a unit that controls the energy applied to the unit for ink jetting in accordance with the ink temperature.

The control range of the ink composition temperature is preferably adjusted to the set temperature ± 5°C, more preferably the set temperature ± 2°C, and even more preferably the set temperature ± 1°C.

### • Exposure

The light source may be α-rays, γ-rays, X-rays, ultraviolet radiation, visible radiation, infrared radiation, electron beam, or the like. Specifically, a commonly used mercury lamp, a metal halide lamp or the like may be used, and a light emitting diode, a semiconductor laser, a fluorescent lamp and the like may also be used. Light sources, electron waves and the like which induce the polymerization reaction of the ink, such as a hot cathode tube, a cold cathode tube, an electron beam and X-rays, may be used.

The peak wavelength of the active radiation is preferably from 200 to 600 nm, more preferably from 300 to 450 nm, and even more preferably from 350 to 420 nm. The output power of the active radiation is preferably 2,000 mJ/cm² or less, more preferably from 10 to 2,000 mJ/cm², even more preferably from 20 to 1,000 mJ/cm², and particularly preferably from 50 to 800 mJ/cm².

In regard to the irradiation with an active radiation, it is preferable to perform the irradiation with a radiation from a light emitting diode that generates an ultraviolet radiation having a peak emission wavelength of from 350 to 420 nm, and a maximum illuminance at the exposure surface of 10 mW/cm² to 1,000 mW/cm².

When a metal halide lamp is used for the exposure, a lamp having an output power of 10 to 1000 W/cm, and an illuminance at the exposure surface of 1 mW/cm² to 100 W/cm², is preferable.

It is preferable for the high pressure mercury lamp, metal halide lamp and the like to have an exhaust unit, because ozone is generated along with electric discharge. The exhaust unit is suitably disposed such that the unit also functions to carry out the recovery of the ink mist generated at the time of ink jetting.

Next, preferable conditions for the irradiation with active energy rays will be described. The basic method of irradiation is disclosed in JP-A No. 60-132767.
Specifically, a light source is provided on both sides of the head unit, and the head and the light source are scanned in a shuttling manner. Irradiation is carried out after the impact of the ink, after a certain time. Furthermore, curing is completed by a separate light source that does not necessitate driving. WO 99/54415 discloses a method of using an optical fiber, or a method of irradiating a recorded area with UV radiation by hitting a collimated light source to mirror surfaces that are provided at the lateral sides of the head unit, as the method of irradiation. It is possible to use these irradiation methods in this invention.

When an ink jetting nozzle is irradiated with an active energy ray for curing, the ink mist or the like attached to the nozzle surface is solidified, and may pose an obstacle to ink jetting. Thus, it is preferable to take measures such as light shielding, in order to minimize irradiation of nozzles. Specifically, it is suitable to provide a barrier that prevents irradiation of the nozzle plate, or to provide a unit for limiting the incident angle to the medium to be recorded so as to reduce stray light.

According to the invention, it is preferable to set the time taken from impact to irradiation to be from 0.01 to 0.5 seconds, and it is preferable to expose the ink composition to a radiation after from 0.01 to 0.3 seconds, and more preferably from 0.01 to 0.15 seconds.
As such, by controlling the time taken from impact to exposure to be extremely short, it is made possible to prevent the impacted ink from bleeding before curing. Also, even for a porous medium to be recorded, since the medium may be exposed before the ink composition penetrates down to the core part where the light source does not reach, unreacted monomers are suppressed from remaining behind, and consequently, an odor originating therefrom may be reduced. When the inkjet recording method described above and the ink composition of the invention are used in combination, a large synergistic effect may be obtained. When such a recording method is employed, the dot diameter of impacted ink may be maintained constant even for various recording media that differ in the surface wettability, and thus the image quality is enhanced.

### • System parameters

Upon forming an image, the ink impact diameter on the medium to be recorded is suitably in the range of 10 µm to 500 µm, and for this reason, the diameter of ink droplets at the time of jetting is preferably from 5 µm to 250 µm, while the nozzle diameter is preferably from 15 µm to 100 µm.
For the purpose of forming an image, the number of pixels per inch is preferably from 50 to 2400 dpi, and for this reason, the nozzle density in the head is preferably from 10 to 2400 dpi. Here, even if the nozzle density in the head is low, when the nozzles are tilted against the direction of conveyance of the medium to be recorded, or when plural head units are disposed to be relatively tilted, impact of ink droplets at a high density may be realized with a head with large nozzle intervals. Furthermore, high density image recording may be realized by conveying the medium to be recorded to a predetermined extent whenever the head moves at a low nozzle pitch as a result of the shuttling movement of the head or medium to be recorded as described above, and thus impacting ink droplets at different positions.

The amount of ink impacted onto the medium to be recorded may be suitably controlled to any amount between 0.05 g/m² and 25 g/m² in order to express a satisfactory gradation, and it is preferable to control the size of the ink droplets jetted from the head, and/or the quantity thereof, in order to realize this amount.

In regard to the gap between the head and the medium to be recorded, if the gap is too broad, air flows out concomitantly with the movement of the head or medium to be recorded, and the flight of the ink droplets is disrupted, so that the accuracy on the position of impact is decreased. On the other hand, if the gap is too narrow, there is a risk that the head and the medium to be recorded are brought to contact because of the surface unevenness of the medium to be recorded, vibration caused by the conveyance mechanism, or the like. Thus, the interval is preferably maintained at about 0. 5mm to 2 mm.

### • Ink set

The ink may be of a single color, or may be of cyan, magenta and yellow colors. The ink may be a set of four colors including black, or inks of specific colors other than these colors, which are called special colors, may also be used. The colored material may be a dye or a pigment. In regard to the order of droplet strike of these inks, the droplet strike may be carried out such that the inks are made to impact in an increasing order of brightness, or may be carried out such that the inks are made to impact in a decreasing order of brightness.
Thus, it is preferable to carry out the droplet strike in a suitable order in terms of the image recording quality.

When the ink droplet strike is overlapped in a decreasing order of brightness from the color of highest brightness, it is easy for the active energy ray to reach to the ink at the lower part, while an increase in the curing sensitivity, an increase in the residual monomers, generation of foul odor, and deterioration of adhesiveness hardly occur. In regard to the irradiation, all of the colors may be jetted and collectively exposed, but it is preferable from the viewpoint of curing acceleration, to expose each color separately.
The signals of an image to be recorded is preferably subjected to signal processing so as to obtain satisfactory color reproducibility, as described in JP-A No. 6-210905 for example.

The ink composition of the invention may also be used for three-dimensional modeling applications and the like, in addition to the inkjet recording applications, and may also be used for canister printing applications or food product applications. In these applications, images may be formed using known methods, and reference may be made to, for example, the descriptions of Japanese Patent No. 2679586 and the like.

### • Medium to be recorded

As for the medium to be recorded on which recording is performed using the ink composition of the invention, ink-permeable recording media and non-ink-permeable recording media may be used together. Examples of the ink-permeable recording media include ordinary papers, papers exclusive for inkjet use, coated papers, papers for shared use in electrophotography, fabrics, unwoven fabrics, porous films, macromolecular absorbers, and the like. These are described as "materials to be recorded" in JP-A No. 2001-1891549 and the like.

Example of the non-ink-permeable recording media include art papers, synthetic resins, rubbers, resin-coated papers, glass, metals, porcelain, wood, and the like. In addition, base materials prepared by combining a number of these materials and processing into complex materials to add the respective functions, may also be used.

Any synthetic resin may be used as the synthetic resin, but for example, polyesters such as polyethylene terephthalate and polybutadiene terephthalate; polyolefins such as polyvinyl chloride, polystyrene, polyethylene, polyurethane and polypropylene; and acrylic resins, polycarbonates, acrylonitrile-butadiene-styrene copolymers, diacetates, triacetates, polyimides, cellophane, celluloids, and the like may be mentioned.

The shape (thickness) of a base material using the synthetic resin may be film-shaped, card-shaped or block-shaped, and may be appropriately selected according to the desired purpose without particularly limitation. These synthetic resins may be transparent or may be opaque. In regard to the use form of the synthetic resin, the synthetic resin may be used in the form of the film that is used in so-called soft packaging according to a preferable embodiment, and various non-absorptive plastics and films thereof may be used. Examples of the films formed from various plastics include polyethylene terephthalate (PET) films, biaxially stretched polystyrene (OPS) films, biaxially stretched polypropylene (OPP) films, biaxially stretched nylon (ONy) films, polyvinyl chloride (PVC) films, polyethylene (PE) films, and triacetylcellulose (TAC) films.

Examples of the resin-coated paper include transparent polyester films, opaque polyester films, opaque polyolefin resin films, and paper supports laminated on both surfaces with polyolefin resins. The paper supports laminated on both surfaces with polyolefin resins are particularly preferable.

As discussed above, according to the invention, an ink composition satisfying various characteristics such as curability, adhesiveness and flexibility, collectively and to a high degree may be obtained. When this is utilized in image recording, an image having excellent adhesiveness and flexibility may be obtained.

### EXAMPLES

Hereinafter, the present invention will be explained by way of Examples, but the invention is not intended to be limited to these Examples. Furthermore, the present Examples show examples of the production of inks for inkjet recording as an example of the ink composition.

### Synthesis Example 1

Synthesis of specific polymerizable compound (a-1)

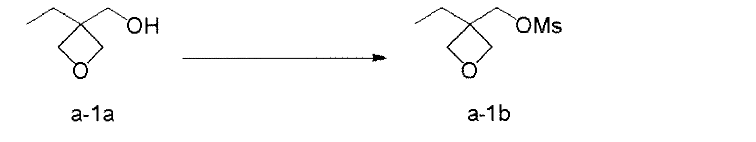

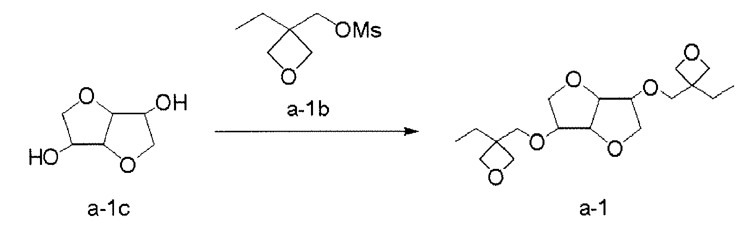

### i) Synthesis of oxetane compound having mesyl group (a-1b)

A solution of 87.1 g (0.75 mol) of 3-ethyl-3-oxetanemethanol (compound (a1-a) as shown in the above scheme, manufactured by Tokyo Chemical Industry Co., Ltd.) in 250 mL of ethyl acetate was cooled to 0°C, and 90.2 g (0.79 mol) of methanesulfonyl chloride (manufactured by Tokyo Chemical Industry Co., Ltd.) was added thereto while the mixture was stirred. Subsequently, 89.0 g (11.3 mol) of pyridine (manufactured by Wako Pure Chemical Industries, Ltd.) was added dropwise thereto, while the internal temperature was maintained in the range of 0°C to 15°C. After completion of the dropwise addition, the mixture was stirred for 4 hours at 25°C, and then was cooled to 0°C. 350 mL of distilled water was added to the mixture, and the resulting mixture was warmed again to 25°C and stirred for 10 minutes. The reaction liquid was transferred to a separatory funnel, and the aqueous layer was removed. The organic layer was washed with 200 mL of 0.5 mol/L hydrochloric acid, and then two times with 200 mL of saturated brine. The organic layer was then dried over anhydrous sodium sulfate, and the solvent was distilled off under reduced pressure. Thus, 122 g (yield 83%) of a crude product (yellow liquid) of compound (a-1b) was obtained. The obtained compound (a-1b) was directly used in the synthesis of specific polymerizable compound (a-1b) without purification.

### ii) Synthesis of specific polymerizable compound (a-1)

A solution of 10.8 g (0.074 mol) of isosorbide (compound (a-1c) shown in the above scheme, manufactured by Tokyo Chemical Industry Co., Ltd.) in 100 mL of DMSO was cooled to 0°C, and 18.2 g (0.162 mol) of potassium t-butoxide (manufactured by Wako Pure Chemical Industries, Ltd.) was added to the solution five times in five divided portions. The resulting mixture was then stirred for 20 minutes at room temperature (about 25°C). This liquid was warmed to 35°C, and 31.6 g (0.163 mol) of the compound (a-1b) was added dropwise thereto, while the internal temperature was maintained in the range of 35°C to 55°C. After completion of the dropwise addition, the mixture was stirred for 30 minutes at 60°C. This reaction liquid was poured into 200 mL of distilled water, and the mixture was extracted with 150 mL of ethyl acetate. The extract was washed with 100 mL of water and 100 mL of saturated brine and dried over anhydrous sodium sulfate, and then the solvent was distilled off under reduced pressure. Thus, a crude product containing the specific polymerizable compound (a-1) was obtained. The obtained crude product was purified by silica gel chromatography (eluent: ethyl acetate/hexane = 1/1), and 13.5 g (yield 53%) of the specific polymerizable compound (a-1) was obtained as a colorless transparent liquid.

¹H-NMR (CDC¹³, 300MHz) : ^{™}(ppm) : 0.8-1.0(6H, m), 1.6-1.8(4H, m), 3.5-3.7(4H, m), 3.8-4.1(6H, m), 4.3-4.6(9H, m), 4.6-4.7(1H, m).

### Production of pigment dispersion

Prior to the preparation of an ink, a pigment dispersion was prepared by adding a pigment, together with a dispersant, to the polymerizable compound according to the prescription shown below.

| | |
|---|---|
| • Pigment | 20% by mass |
| (trade name: IRGALITE BLUE GLVO (PB-15:4), manufactured by Ciba Specialty Chemicals Corp.) | |
| • Polymerizable compound | 72% by mass |
| (trade name: OXT-211, manufactured by Toagosei Co., Ltd.) | |
| • Dispersant | 8% by mass |
| (trade name: SOLSPERSE 28000, manufactured by Lubrizol Corp.) | |

A liquid mixture formed by mixing the components mentioned above was placed in a ball mill, and was dispersed for 16 hours using zircon beads having a diameter of 0.6 mm, to obtain a pigment dispersion.

### Example 1

The produced pigment dispersion and polymerizable compound (cationic polymerizable monomer), and a photoacid generator, a sensitizer and a surfactant were mixed to obtain a composition shown below, and the mixture was stirred with a high speed, water-cooled stirrer. Thus, a cyan ink composition for UV inkjet was obtained.

| | |
|---|---|
| • Pigment | 2% by mass |
| (trade name: IRGALITE BLUE GLVO (PB-15:4), manufactured by Ciba Specialty Chemicals Corp.) | |
| • Dispersant | 0.8% by mass |
| (trade name: SOLSPERSE 28000, manufactured by Lubrizol Corp.) | |
| • Photoacid generator | 6% by mass |
| (trade name: IRGACURE 250, manufactured by Ciba Specialty Chemicals, Corp.) | |
| • Sensitizer (9,10-dibutoxyanthracene) | 3% by mass |
| • Surfactant | 0.2% by mass |
| (trade name: BYK307, manufactured by BYK Chemie Corp.) | |
| • Specific polymerizable compound (a-1) | 34% by mass |
| • Monofunctional oxetane compound | 31 % by mass |
| (trade name: OXT-211, manufactured by Toagosei Co., Ltd.) | |
| • Bifunctional oxirane compound | 23% by mass |
| (trade name: C3000, manufactured by Daicel Chemical Industries, Ltd.) | |

### Examples 2 to 11 and Comparative Examples 1 and 2

Ink compositions of Examples 2 to 11 and Comparative Examples 1 and 2 were prepared in the same manner as for the ink composition prepared in Example 1, except that components were changed to the components indicated in Table 1. However, in regard to Examples 4, 5, 7 and 11, OXT-221 was used instead of OXT-211 as the oxetane compound (polymerizable compound) for the pigment dispersion preparation.

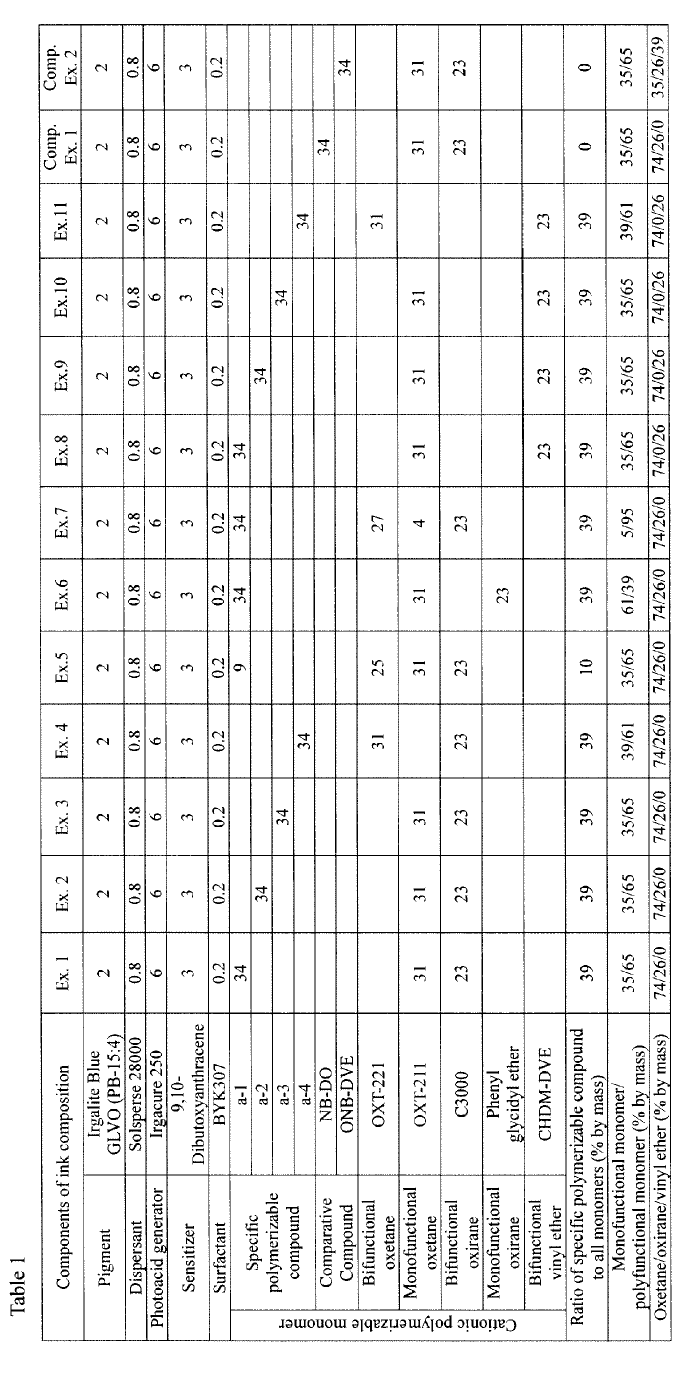

The values indicated in the Table 1 represent the ratio of incorporation (% by mass). The details of the various compounds indicated in the Table 1 will be described below.

The structures of "C3000" used as the bifunctional oxirane compound and "phenyl glycidyl ether" used as the monofunctional oxirane compound are as represented by the following chemical formulas.
Here, "C3000" is an oxirane compound manufactured by Daicel Chemical Industries, Ltd., and "phenyl glycidyl ether" is an oxirane compound manufactured by Sigma-Aldrich Company.

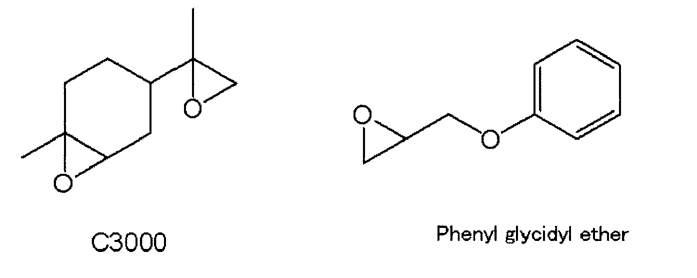

The structures of the specific polymerizable compounds (a-1), (a-2), (a-3) and (a-4), and "NB-DO", "OXT-211" and "OXT-221" used as other oxetane compounds are as represented by the following chemical formulas.
Here, "NB-DO" is an oxetane compound having a bicyclo ring skeleton which does not contain an oxygen atom, and it was used as a comparative compound against the specific polymerizable compounds.

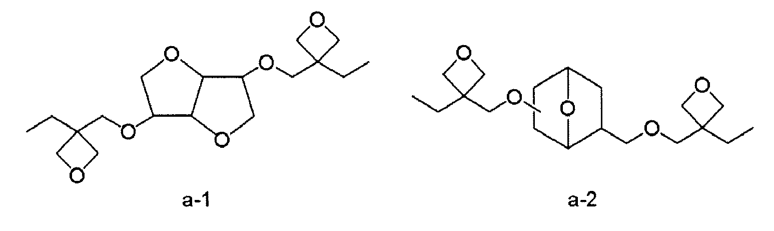

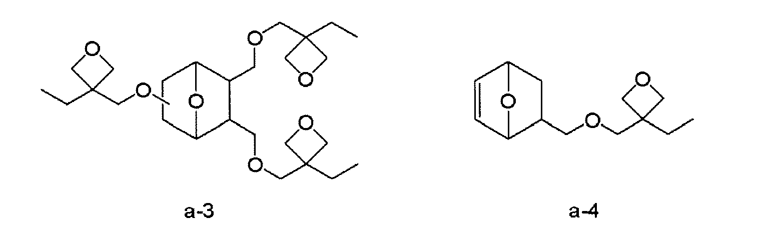

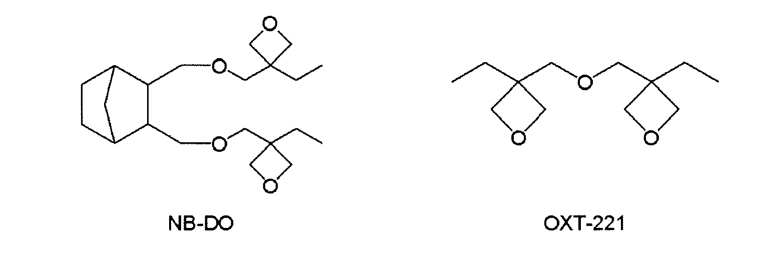

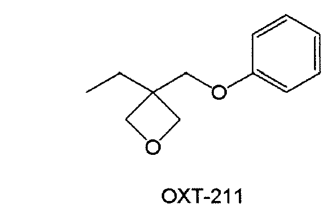

The specific polymerizable compounds (a-2), (a-3) and (a-4) were synthesized by the same method as described above in the Synthesis Example for the specific polymerizable compound (a-1).
"NB-DO" was synthesized according to the method described in JP-A No. 2004-250434. "OXT-211" and "OXT-221" are oxetane compounds manufactured by Toagosei Co., Ltd.

The structures of "ONB-DVE," which is a vinyl ether compound, and "CHDM-DVE," which is a bifunctional vinyl ether compound, are as represented by the following formulas. "ONB-DVE" was synthesized according to the method described in JP-A No. 2006-69897. Furthermore, "CHDM-DVE" is a vinyl ether compound manufactured by Sigma-Aldrich Company.
Here, "ONB-DVE" is a vinyl ether compound having a bicyclo ring skeleton containing oxygen atoms, and it was used as a comparative compound against the specific polymerizable compounds.

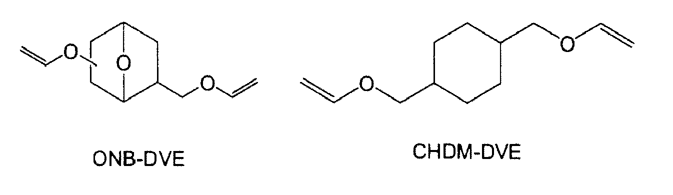

### Printing and exposure

The respective ink compositions of the Examples and Comparative Examples obtained as described above were used to perform droplet impacts using a piezoelectric type inkjet head. The head has 318 nozzles at a nozzle density of 150 nozzles per 25.4 mm, and these are fixed in two nozzle row directions in a slanting manner at a nozzle interval of 1/2, so that 300 droplets per 25.4 mm are impacted on the medium from the direction of nozzle arrangement.

The head and the ink are controlled so that the vicinity of the jetting section was at 50±0.5°C, by circulating warm water within the head. The ink jetting from the head is controlled by a piezoelectric driving signal applied to the head, so as to enable a jetting of 6 to 42 pl per one droplet. In the present Example, droplets from the head are impacted while the medium is conveyed at a position of 1 mm below the head. The speed of conveyance may be set up in the range of from 50 to 200 mm/s. The piezoelectric driving frequency may be set up to 4.6 kH at maximum, and the impacting droplet amount may be controlled based on these settings.
In the present evaluation, the amount of ink jetting was controlled to be 24 pl by setting the speed of conveyance to 90 mm/s and the driving frequency to 1.9 kHz, and thereby ink was impacted at 10 g/m² to obtain a solid printed image.

The medium is conveyed to the exposure unit after being subjected to droplet impact, and is exposed to an ultraviolet light emitting diode (UV-LED). In the present Example, NCCU033 (trade name) manufactured by Nichia Corp. was used as the UV-LED. This LED emits an ultraviolet light having a wavelength of 365 nm from the tip, and when an electric current of about 500 mA is passed therethrough, a light of about 100 mW is emitted from the tip. A plurality of these diodes are arranged at intervals of 7 mm, and a power of 0.3 W/cm² is obtained at the medium surface. The time taken from the droplet impact to the exposure, and the duration of exposure may be changed on the basis of the speed of conveyance of the medium, and the distance between the head and the LED in the direction of conveyance. In the present Example, exposure is achieved after about 0.5 seconds after the impact. The exposure energy on the medium may be adjusted to a value between 0.01 and 15 J/cm², in accordance with the distance to the medium and the set speed of conveyance. In the present Example, the exposure energy was adjusted on the basis of the speed of conveyance. Exposure power and exposure energywere measured using a value obtained by integration over a wavelength range of 220 to 400 nm using a spectroradiometer URS-40D (trade name) manufactured by Ushio Inc. In the present evaluation, a thick PET film or a polyvinyl chloride sheet was used as the medium, and the printing and exposure test was carried out in an environment at 23°C and R.H. 60%. The thickness of the cured image was 19 µm.

### Evaluation

The curing sensitivity of the ink composition, flexibility of the cured product, and adhesiveness to the recording medium of the Examples and Comparative Examples were evaluated by the techniques shown below, and the results are shown in Table 2.

### 1. Curing sensitivity

Each of the ink compositions was used to perform printing on a PVC sheet using the apparatus described above. The amount of integral exposure was adjusted by changing the speed of conveyance, and the ink was cured, to thereby obtain a printed material. The exposure energy used during the curing was measured with an integrating radiometer (trade name: UV POWERMAP, manufactured by EIT, Inc.). The curability was determined based on the surface stickiness of the printed material, and the minimum integrated amount of exposure resulting in the absence of stickiness was evaluated by the following criteria.
A: Less than 100 mJ/cm²
B: 100 mJ/cm² or greater and less than 250 mJ/cm²
C: 250 mJ/cm² or greater and less than 350 mJ/cm²
D: 350 mJ/cm² or greater and less than 500 mJ/cm²
E. 500 mJ/cm² or greater
Practically, the sensitivity needs to be rated C or higher, preferably B or higher, and particularly preferably A.

### 2. Flexibility

The evaluation of flexibility was evaluated based on the degree of cracks generated on the cured film after bending the PVC sheet 10 times. This bending test was carried out in a five-grade evaluation, which rates a state with no cracks being generated at all, as 5 points, and rates a state with no practical problems as 3 points.

### 3. Adhesiveness to base material

An evaluation of the adhesiveness to a polystyrene substrate was carried out as follows.
That is, CELLOTAPE (registered trademark) was adhered and firmly pressed on the cured product having a size of 2 cmx 1 cm, and the tape was quickly peeled off perpendicularly to the surface of the cured product. The state of the cured product thereafter was observed by visual inspection. This adhesiveness test was carried out in a five-grade evaluation, which rates a state with no peel-off of the cured product from the base material, as 5 points, and rates a state with no practical problems as 3 points.

**Table 2**

| Evaluation item | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Comp. Ex. 1 | Comp. Ex. 2 |
|---|---|---|---|---|---|---|---|---|---|---|---|---|---|
| Integrated amount of exposure (mJ/cm²) | B | B | A | B | C | C | A | A | A | A | A | B | B |
| Flexibility | 5 | 5 | 4 | 4 | 4 | 5 | 3 | 5 | 5 | 5 | 4 | 4 | 2 |
| Adhesiveness | 5 | 5 | 4 | 4 | 3 | 4 | 3 | 5 | 5 | 5 | 5 | 2 | 4 |

From the results shown in Table 2, it is understood that the ink compositions of Examples 1 to 11 containing specific polymerizable compounds have satisfactory sensitivity, flexibility and adhesiveness in a well-balanced manner, as compared with the ink composition of Comparative Example 1 containing an oxetane compound having a bicyclo ring skeleton that does not contain an oxygen atom, or the ink composition of Comparative Example 2 containing a vinyl ether compound having a bicyclo ring skeleton that contains an oxygen atom.
It is understood from a comparison of Examples 1 to 3 with Example 4 that the specific polymerizable compound is such that a bifunctional or higher-functional compound has more satisfactory film properties. It is also understood from a comparison between Example 1 and Example 5 that the effects of the invention are sufficiently exhibited when the specific polymerizable compound is contained in an amount of 20% by mass or more. Furthermore, it is understood from a comparison of Example 1 with Examples 6 and 7 that when the ratio of the monofunctional polymerizable monomer in the cationic polymerizable monomers is set in an appropriate range, the sensitivity, flexibility and adhesiveness may all be achieved together at high levels. It is understood from a comparison of Example 1 with Examples 8 to 11 that when the ratio of the specific polymerizable compound as the cationic polymerizable monomer, and the oxirane compound and vinyl ether compound used in combination therewith is controlled, higher sensitivity and film properties may be achieved.

## Claims

1. An active energy ray-curable ink composition comprising at least a compound that generates an acid by exposure to radiation and cationic polymerizable monomers, the ink composition including as the cationic polymerizable monomers a compound represented by the following Formula (1), and at least one of an oxirane compound or a vinyl ether compound: 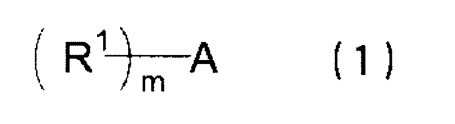 wherein, in Formula (1), R¹ represents a group having an oxetane skeleton; m is an integer from 1 to 4; A represents an m-valent group having a bicyclo ring skeleton or a tricyclo ring skeleton, the bicyclo ring skeleton and the tricyclo ring skeleton respectively containing at least one oxygen atom; and R¹ and A may be substituted with any substituent, that does not have an epoxy structure in the substituent.

2. The active energy ray-curable ink composition of claim 1, comprising the compound represented by Formula (1) and a vinyl ether compound in combination as the cationic polymerizable monomers.

3. The active energy ray-curable ink composition of claim 1 or 2, wherein m in the compound represented by Formula (1) is 2 or 3.

4. The active energy ray-curable ink composition of any one of claims 1 to 3, used for inkjet recording.

5. An inkjet recording method comprising jetting the active energy ray-curable ink composition of any one of claims 1 to 4 on a recording medium using an inkjet recording apparatus; and exposing the jetted ink composition to an active radiation to cure the ink composition.

6. The inkjet recording method of claim 5, wherein the active radiation is an ultraviolet radiation irradiated from a light emitting diode that generates an ultraviolet radiation having a peak emission wavelength in the range of from 350 to 420 nm, and a maximum illuminance at the surface of the medium to be recorded of from 10 mW/cm² to 2,000 mW/cm².

7. A printed material that is recorded according to the inkjet recording method of claim 5 or 6.
